# EUROPÄISCHE PATENTSCHRIFT

(11) **EP 1 777 913 B1**
(45) Veröffentlichungstag und Bekanntmachung des Hinweises auf die Patenterteilung: **25.11.2009**
(21) Anmeldenummer: 06121893.9
(22) Anmeldetag: 06.10.2006
(51) Int. Cl.: H04L 29/06

(54) **Verfahren zur Verschlüsselung bzw. Entschlüsselung von Datenpaketen eines Datenstroms**
Method to enciphering/deciphering data packets of a data steam
Procédé pour le chiffrement/déchiffrement de paquets de données d'un flux de paquets

(30) Priorität: 21.10.2005 DE 102005051577
(43) Veröffentlichungstag der Anmeldung: 25.04.2007
(73) Patentinhaber: ENGEL SOLUTIONS AG, 14532 Stahnsdorf (DE)
(72) Erfinder: Berndes, Thomas, 14532, Stahnsdorf (DE); Engel, Christian, 14532, Stahnsdorf (DE); Gehring, Andreas, 14163, Berlin (DE)
(74) Vertreter: Bittner, Thomas L.

(56) Entgegenhaltungen:
- EP-A2- 0 957 651
- WO-A2-01/46782
- US-A1- 2002 107 001
- SCHNEIER B: "Applied Cryptography, COMBINING BLOCK CIPHERS" APPLIED CRYPTOGRAPHY. PROTOCOLS, ALGORITHMS, AND SOURCE CODE IN C, NEW YORK, JOHN WILEY & SONS, US, 1996, Seiten 357-368, XP002244523 ISBN: 0-471-11709-9

## Beschreibung

Die vorliegende Erfindung betrifft ein Verfahren zur Verschlüsselung bzw. Entschlüsselung von Datenpaketen eines Datenstroms sowie eine Signalfolge und ein Datenverarbeitungssystem zur Ausführung des Verfahrens.

Die zunehmende Globalisierung der Wirtschaft führt dazu, dass sowohl verschiedene Standorte eines Unternehmens als auch Standorte von Lieferanten und Kunden häufig über die ganze Welt verteilt sind. Um einen Datenaustausch zwischen diesen Parteien zu ermöglichen, werden verschiedene Arten von Übertragungsnetzwerken wie beispielsweise Telephonnetzwerke, Funknetzwerke oder Computernetzwerke (wie beispielsweise das World Wide Web / Internet) verwendet. Entsprechendes gilt für den Datenaustausch zwischen Privatpersonen oder öffentlichen Institutionen.

Bei den vorstehend genannten Übertragungsnetzwerken ist es nachteilig, dass ein versierter Dritter die übermittelten Daten vergleichsweise einfach abfangen, mitlesen und / oder manipulieren kann. Dies ist problematisch, da häufig auch sensible Daten, welche beispielsweise ein Geschäftsgeheimnis enthalten können, über das Netzwerk ausgetauscht werden.

Zur Lösung dieses Problems ist es bekannt, dass die auszutauschenden Daten vor einer Übermittlung über das Netzwerk durch einen Sender unter Verwendung eines Kodierschlüssels und eines Schlüsselungsalgorithmus verschlüsselt werden. Die verschlüsselten Daten werden über das Übertragungsnetzwerk übertragen und von einem jeweiligen Empfänger unter Verwendung des gleichen Kodierschlüssels und Schlüsselungsalgorithmus entschlüsselt, um die originären Daten zu erhalten. Der Kodierschlüssel und der Schlüsselungsalgorithmus sind dabei so gewählt, dass die verschlüsselten Daten für einen unberechtigten Dritten, der den Kodierschlüssel und/oder Schlüsselungsalgorithmus nicht kennt, nur schwer entschlüsselt werden können. Um eine gewisse Sicherheit zu erreichen, darf der Kodierschlüssel und/oder Schlüsselungsalgorithmus daher nur dem Sender und dem berechtigten Empfänger bekannt sein.

Die jeweilige Sicherheit hängt dabei unter anderem von der Art des verwendeten Schlüsselungsalgorithmus und der Länge des verwendeten Kodierschlüssels ab. Dabei wird unter Kodierschlüssel und Schlüsselungsalgorithmus ein zwischen dem Sender und Empfänger individuell vereinbarter Schlüssel bzw. Algorithmus verstanden, der nicht von einem jeweiligen Netzwerkprotokoll, Betriebssystem oder ähnlichem des verwendeten Übertragungsnetzwerks abhängt. Eine derartige Abhängigkeit ist beispielsweise bei einer SSL-Verbindung in Kombination mit einer VPN-Verbindung gegeben. Bei SSL-Verbindungen und VPN-Verbindungen ist die Art des verwendeten Algorithmus unabhängig voneinander in einer jeweiligen Konfigurationsdatei vorgesehen, so dass ggf. auch bei beiden der gleiche Algorithmus verwendet wird.

Problematisch an der vorstehend beschriebenen Übertragung von verschlüsselten Daten ist, dass das Verschlüsseln und Entschlüsseln von Daten unter Verwendung eines Kodierschlüssels und eines Schlüsselungsalgorithmus einen gewissen Sachverstand erfordert und zum Teil sehr zeitaufwendig ist. In der Folge wird auch bei sensiblen Daten häufig auf eine Verschlüsselung verzichtet.

Weiter hat sich in der Vergangenheit gezeigt, dass es unberechtigten Dritten aufgrund der ständig steigenden Leistungsfähigkeit von Computern immer schneller gelingt, mittels eines Kodierschlüssels und eines Schlüsselungsalgorithmus verschlüsselte Daten auch ohne Kenntnis des verwendeten Kodierschlüssels und/oder Schlüsselungsalgorithmus zu entschlüsseln. Dieses Problem wird durch das sogenannte "Grid-Computing" verstärkt, bei dem die zur Überwindung eines Schlüsselungsalgorithmus bzw. Kodierschlüssels erforderliche Rechenleistung durch eine Vielzahl von über ein Netzwerk verteilte Computer bereitgestellt wird.

Zur Lösung dieses Problems ist es aus der WO 8701483 bekannt, zu verschlüsselnde Daten mehrmals hintereinander mit dem gleichen Schlüsselungsalgorithmus und unterschiedlichen Kodierschlüsseln zu verschlüsseln.

Dokument US 2002 107001 offenbart ein Verfahren zur Verschlüsselung von Daten, weiche in zwei aufeinander folgenden Verschlüsselungsstufen eingesetzt werden.

Dieser Ansatz hat jedoch den Nachteil, dass die Sicherheit der verschlüsselten Daten trotz der Mehrfachverschlüsselung erheblich reduziert ist, wenn es einem unberechtigten Dritten gelungen ist, Kenntnis über den Schlüsselungsalgorithmus und dessen Überwindung zu erhalten. Die Ermittlung der unterschiedlichen Kodierschlüssel ist dann vergleichsweise einfach möglich.

Weiter ist es zur Lösung dieses Problems aus der WO 0026791 bekannt, die zu verschlüsselnden Daten in Teildaten aufzuteilen und die Teildaten jeweils mit unterschiedlichen Schlüsselungsalgorithmen zu verschlüsseln.

Dies hat den Vorteil, dass nur die Sicherheit der entsprechenden Teildaten reduziert ist, wenn ein unberechtigter Dritter Kenntnis über einen der verwendeten Schlüsselungsalgorithmen und dessen Überwindung erhalten hat. Gleichwohl kann ein unberechtigter Dritter dann vergleichsweise einfach Kenntnis dieser Teildaten erlangen. Dies kann bei sensiblen Daten bereits äußerst schädlich sein.

Aufgrund der vorstehenden Probleme ist eine automatische Verschlüsselung von zu übertragenden Daten durch eine Hardware derzeit nur mit erheblichen Nachteilen zu realisieren, da die Hardware schnell veraltet und dann ausgetauscht werden muss.

Ausgehend hiervon ist es Aufgabe der vorliegenden Erfindung, ein Verfahren zur Verschlüsselung bzw. Entschlüsselung von Datenpaketen eines Datenstroms bereitzustellen, welches auch bei steigender Rechenleistung durch unberechtigte Dritte nur schwer überwunden werden kann, und so ein besonders hohes Maß an Sicherheit aufweist.

Weiter ist es Aufgabe der vorliegenden Erfindung, eine Signalfolge und ein Datenverarbeitungssystem zur Ausführung des Verfahrens bereitzustellen, welche einen besonders einfachen, kostengünstigen und zuverlässigen Aufbau aufweisen.

Die vorstehende Aufgabe wird durch ein Verfahren zur Verschlüsselung von Datenpaketen eines Datenstroms mit den Merkmalen des unabhängigen Anspruchs 1 gelöst.

Weiter wird die vorstehende Aufgabe durch ein Verfahren zur Entschlüsselung von mehrfach verschlüsselten Datenpaketen eines Datenstroms mit den Merkmalen des unabhängigen Anspruchs 1 gelöst.

Zudem wird die vorstehende Aufgabe durch eine Signalfolge, vorzugsweise in Form eines Computerprogrammprodukts, gelöst, welche die Ausführung des Verfahrens nach einem der Ansprüche 1 bis 9 veranlasst, wenn sie in einen Datenverarbeiter (insbesondere einen Mikroprozessor) eines Datenverarbeitungssystems geladen ist.

Schließlich wird die vorstehende Aufgabe durch ein Datenverarbeitungssystem gelöst, wobei das Datenverarbeitungssystem wenigstens Datenpakete eines Datenstroms empfängt, die empfangenen Datenpakete gemäß einer vorgegebenen Vorschrift verarbeitet und dazu programmiert und eingerichtet ist, das Verfahren nach einem der Ansprüche 1 bis 9 auszuführen.

Vorteilhafte Weiterbildungen finden sich in den jeweiligen Unteransprüchen.

Gemäß der vorliegenden Erfindung weist ein Verfahren zur Verschlüsselung von Datenpaketen eines Datenstroms, bei dem ein zu verschlüsselndes Datenpaket automatisch sequentiell in wenigstens zwei aufeinander folgenden Verschlüsselungsstufen verschlüsselt wird, die folgenden Schritte auf: Bestimmen von Anzahl, Art und Reihenfolge von in den aufeinander folgenden Verschlüsselungsstufen zu verwendenden unterschiedlichen Schlüsselungsalgorithmen. Bestimmen von in den aufeinander folgenden Verschlüsselungsstufen zu verwendenden unterschiedlichen Kodierschlüsseln. Zuordnen jeweils eines Kodierschlüssels zu jeweils einem Schlüsselungsalgorithmus in jeweils einer Verschlüsselungsstufe und sequentielles Verschlüsseln eines zu verschlüsselnden Datenpakets in wenigstens zwei aufeinander folgenden Verschlüsselungsstufen, um ein mehrfach verschlüsseltes Datenpaket zu erhalten.

Somit werden bei dem erfindungsgemäßen Verfahren zu verschlüsselnde Datenpakete empfangen und nach sequentiellem Durchlaufen mehrerer Verschlüsselungsstufen mit unterschiedlichen Schlüsselungsalgorithmen und Kodierschlüsseln als mehrfach verschlüsselte Datenpakete ausgegeben.

Dabei ist das erfindungsgemäße Verfahren prinzipiell auch zur Verschlüsselung von Dateien geeignet: Geladene Dateien bestehen aus einem Datenstrom von Datenpaketen. Die Größe einer Datei ist endlich und hängt variabel von einem jeweiligen Inhalt der Datei ab. Dabei wird die Größe nur durch ein zugrundeliegendes Dateisystem begrenzt. Datenpakete hingegen weisen eine feste maximale Größe auf, welche von den die Datenpakete verarbeitenden Algorithmen (beispielsweise eines Betriebssystems) abhängt. Wird die zulässige Größe eines Datenpakets überschritten, so muss es segmentiert, d.h. auf wenigstens zwei neue Datenpakete aufgeteilt werden.

Die zu verarbeitenden Datenpakete können dabei z.B. vollständige Datenpakete sein, d.h. einen lediglich auf ein jeweiliges verwendetes Übertragungsprotokoll zurückzuführenden Protokolldatenteil und einen die übrigen Daten enthaltenden Nutzdatenteil aufweisen. Alternativ können die zu verarbeitenden Datenpakete auch nur die von ihrem Protokolldatenteil getrennten Nutzdatenteile sein.

Um sicherzustellen, dass die Verschlüsselung nacheinander in wenigstens zwei Verschlüsselungsstufen erfolgt, kann beispielsweise ein Zähler vorgesehen sein, der zu Beginn des Verfahrens auf Null gesetzt und nach jeder Verschlüsselungsstufe inkrementiert wird. Anhand dieses Zählers kann durch Vergleich festgestellt werden, ob eine festgelegte Anzahl von unterschiedlichen Verschlüsselungsstufen nacheinander durchlaufen wurde.

Es wird betont, dass die Festlegung der Reihenfolge nicht für jedes Datenpaket neu erfolgen muss, sondern die Reihenfolge einmal dauerhaft festgelegt sein kann.

Gemäß einer bevorzugten Ausführungsform weist das Verfahren weiter die Schritte eines Erstellens einer unverschlüsselten Schlüsselungs-Charakteristik zu dem mehrfach verschlüsselten Datenpaket und eines Ausgebens der Schlüsselungs-Charakteristik zusammen mit dem mehrfach verschlüsselten Datenpaket auf. Dabei gibt die Schlüsselungs-Charakteristik wenigstens den zeitlich zuletzt verwendeten Schlüsselungsalgorithmus und den zugeordneten Kodierschlüssel an.

Dabei bewirkt die Ausgabe der Schlüsselungs-Charakteristik zusammen mit dem mehrfach verschlüsselten Datenpaket eine explizite oder implizite Zuordnung der Schlüsselungs-Charakteristik zu dem mehrfach verschlüsselten Datenpaket. Eine explizite Zuordnung kann beispielsweise durch ausdrückliche Bezeichnung des zugehörigen mehrfach verschlüsselten Datenpakets erfolgen. Ein Beispiel für eine implizite Zuordnung ist eine zeitliche Korrelation der Ausgabe der Schlüsselungs-Charakteristik und der Ausgabe des mehrfach verschlüsselten Datenpakets. Dabei ist es wichtig zu betonen, dass die Schlüsselungs-Charakteristik weder den wenigstens einen Schlüsselungsalgorithmus noch den wenigstens einen Kodierschlüssel enthält, sondern diese lediglich bezeichnet. Dies kann beispielsweise durch Angabe eines jeweiligen Namens des verwendeten wenigstens einen Schlüsselungsalgorithmus und wenigstens einen zugeordneten Kodierschlüssels erfolgen. Dabei können die Schritte des Erstellens und Ausgebens der Schlüsselungs-Charakteristik wahlweise in einer übergeordneten separaten Vorrichtung ausgeführt werden.

Es kann vorteilhaft sein, wenn das Verfahren in jeder Verschlüsselungsstufe nach dem Verschlüsseln den Schritt eines Hinzufügens der erzeugten unverschlüsselten Schlüsselungs-Charakteristik zu dem jeweiligen verschlüsselten Datenpaket aufweist.

In diesem Fall gibt jede Schlüsselungs-Charakteristik vorzugsweise nur den in der jeweiligen aktuellen Verschlüsselungsstufe verwendeten Schlüsselungsalgorithmus und zugeordneten Kodierschlüssel an. Das Hinzufügen der Schlüsselungs-Charakteristik zu dem jeweiligen verschlüsselten Datenpaket ist jedoch ausdrücklich nur fakultativ. Alternativ kann die Schlüsselungs-Charakteristik beispielsweise auch in jeder Verschlüsselungsstufe nach dem Verschlüsseln zusammen mit dem verschlüsselten Datenpaket ausgegeben werden.

Es kann vorteilhaft sein, wenn jede Verschlüsselungsstufe des erfindungsgemäßen Verfahrens die Schritte eines Ermittelns wenigstens einer Formatvorschrift des in der jeweiligen Verschlüsselungsstufe verwendeten Schlüsselungsalgorithmus und eines Anpassens des Aufbaus des zu verschlüsselnden Datenpakets an den jeweiligen Schlüsselungsalgorithmus unter Verwendung der wenigstens einen Formatvorschrift umfasst. Dabei legt die wenigstens eine Formatvorschrift einen Aufbau für die mit dem jeweiligen Schlüsselungsalgorithmus verschlüsselbaren Datenpakete fest.

Somit ist die Formatvorschrift eine von einem jeweiligen Schlüsselungsalgorithmus abhängende Vorschrift für mittels des jeweiligen Algorithmus verarbeitbare Eingangsdaten. Ein Beispiel für eine derartige Formatvorschrift ist z. B. die Blockgröße der zu verarbeitenden Daten etc..

Dabei kann das Anpassen des zu verschlüsselnden Datenpakets bevorzugt umfassen: Segmentieren des zu verschlüsselnden Datenpakets in mehrere zu verschlüsselnde Teildatenpakete. Verwenden der Teildatenpakete anstelle des zu verschlüsselnden Datenpakets. Erstellen einer unverschlüsselten Segmentier-Charakteristik zu den zu verschlüsselnden Teildatenpaketen, wobei die Segmentier-Charakteristik Teildatenpakete bezeichnet, die durch Segmentieren eines einzelnen Datenpakets gewonnen wurden und Ausgeben der Segmentier-Charakteristik zusammen mit den segmentierten zu verschlüsselnden Teildatenpaketen.

Dies kann erforderlich sein, da das verschlüsselte Datenpaket in Abhängigkeit von einem jeweils verwendeten Schlüsselungsalgorithmus in jeder Verschlüsselungsstufe größer werden kann. Ohne das Vorsehen einer Segmentierung besteht daher die Gefahr, dass in jeder Verschlüsselungsstufe vorgesehene Buffer oder ein zentral beispielsweise für die Datenübergabe vorgesehener Buffer für die verschlüsselten Datenpakete zu klein wird. In der Folge wird die Größe des zu verschlüsselnden Datenpakets vorzugsweise in jeder Verschlüsselungsstufe automatisch an einen jeweils verwendeten Schlüsselungsalgorithmus angepasst.

Alternativ ist es jedoch auch möglich, vor dem Durchlaufen der ersten Verschlüsselungsstufe oder beim Durchlaufen der ersten Verschlüsselungsstufe eine erwartete maximale Größe des mehrfach verschlüsselten Datenpakets abzuschätzen. Dies kann beispielsweise dadurch erfolgen, dass in den jeweiligen Verschlüsselungsstufen in Abhängigkeit von einem jeweiligen Schlüsselungsalgorithmus erwartete Vergrößerungsfaktoren miteinander multipliziert werden. In der Folge kann das zu verschlüsselnde Datenpaket bereits zu Beginn anhand der Formatvorschriften der verschiedenen Schlüsselungsalgorithmen automatisch so segmentiert werden, dass maximale Paketgrößen der von den verschiedenen Schlüsselungsalgorithmen zu verschlüsselnden Datenpakete nicht überschritten werden.

Alternativ kann das Ausgeben der Segmentier-Charakteristik auch für alle Verschlüsselungsstufen gemeinsam am Ende der Mehrfachverschlüsselung des zu verschlüsselnden Datenpakets erfolgen. Weiter kann die Segmentier-Charakteristik wahlweise in jeder Verschlüsselungsstufe zu den zu verschlüsselnden Teildatenpaketen oder am Ende der Mehrfachverschlüsselung zu dem mehrfach verschlüsselten Datenpaket hinzugefügt werden.

Weiter kann das Anpassen des zu verschlüsselnden Datenpakets ein Erstellen eines Datenblocks, welcher das zu verschlüsselnde Datenpaket und eine Block-Charakteristik enthält, wobei die Block-Charakteristik das zu verschlüsselnde Datenpaket in dem Datenblock kennzeichnet, und ein Verwenden des Datenblocks anstelle des zu verschlüsselnden Datenpakets umfassen.
Diese auch unter dem Begriff "Padding" bekannte Vorgehensweise führt in Abhängigkeit von einer jeweiligen Formatvorschrift eines jeweiligen Schlüsselungsalgorithmus zu Datenblöcken, deren Größe einem mehrfachen einer Blockgröße des jeweiligen Schlüsselungsalgorithmus entspricht. Hierfür kann ein zu verschlüsselnder Datenblock an seinem Ende beispielsweise solange mit Zeichen (wie z.B. Zufallsdaten oder auch vorgegebenen Daten) aufgefüllt werden, bis die jeweilige Blockgröße erreicht ist. Die Anzahl der aufgefüllten Zeichen wird dann in Form der Block-Charakteristik notiert. Wahlweise kann die Block-Charakteristik dem jeweiligen Datenblock z.B. als letztes Zeichen (Byte) des Datenblocks hinzugefügt werden.

Gemäß einer Ausführungsform kann das Verfahren weiter ein Aufteilen eines Haupt-Kodierschlüssels in mehrere unterschiedliche Teil-Kodierschlüssel und ein Zuordnen jeweils eines Teil-Kodierschlüssels zu jeweils einem Schlüsselungsalgorithmus in jeweils einer Verschlüsselungsstufe umfassen.

Dies ist insbesondere in Verbindung mit der vorstehend beschriebenen Schlüsselungs-Charakteristik sinnvoll. In diesem Fall kann ein (beispielsweise aus einem vorgegebenen Zufallszahlenraum bestehender) Haupt-Kodierschlüssel dauerhaft vorgegeben sein. Mittels der wenigstens einen Schlüsselungs-Charakteristik können Bereiche des Haupt-Kodierschlüssels angegeben sein, die jeweils einem Teil-Kodierschlüssel entsprechen.

Das Bestimmen der in den aufeinander folgenden Verschlüsselungsstufen zu verwendenden unterschiedlichen Kodierschlüssel kann weiter ein Ermitteln wenigstens einer Schlüsselformatvorschrift des in der jeweiligen Verschlüsselungsstufe zu verwendenden Schlüsselungsalgorithmus umfassen, wobei die wenigstens eine Schlüsselformatvorschrift einen Aufbau der mit dem jeweiligen Schlüsselungsalgorithmus verwendbaren Kodierschlüssel festlegt. Ein typisches Beispiel für eine Schlüsselformatvorschrift sind die minimale und maximale Länge eines verwendbaren Kodierschlüssels. Anschließend kann die Schlüsselformatvorschrift bei der Bestimmung des in der jeweiligen Verschlüsselungsstufe zu verwendenden Kodierschlüssels berücksichtigt werden.

Gemäß einer Ausführungsform kann wenigstens eine Verschlüsselungsstufe die folgenden Schritte umfassen: Hinzufügen von Zufallsdaten zu dem zu verschlüsselnden Datenpaket vor dem Verschlüsseln. Verwenden des die Zufallsdaten aufweisenden Datenpakets anstelle des zu verschlüsselnden Datenpakets. Erstellen einer Zufallsdaten-Charakteristik zu dem die Zufallsdaten aufweisenden zu verschlüsselnden Datenpaket, wobei die Zufallsdaten-Charakteristik einen mit Zufallsdaten gefüllten Bereich des die Zufallsdaten aufweisenden zu verschlüsselnden Datenpakets angibt und Ausgeben der Zufallsdaten-Charakteristik zusammen mit dem die Zufallsdaten aufweisenden zu verschlüsselnden Datenpaket.

Aufgrund des Hinzufügens von Zufallsdaten werden jeweils unterschiedliche verschlüsselte Datenpakete erhalten, wenn ein identisches Datenpaket unter Verwendung eines identischen Schlüsselalgorithmus und eines identischen Kodierschlüssels in identischen Schritten, aber zu unterschiedlichen Zeitpunkten, verschlüsselt wird. Das Hinzufügen von Zufallsdaten dient daher dazu, einen verwendeten Schlüsselungsalgorithmus und Kodierschlüssel in dem verschlüsselten Datenpaket zu verschleiern. Dabei kann ein mit Zufallsdaten gefüllter Bereich aufgrund der Verwendung der Zufallsdaten-Charakteristik leicht in dem zu verschlüsselnden Datenpaket identifiziert werden. Die Zufallsdaten-Charakteristik kann wahlweise am Ende der letzten Verschlüsselungsstufe gemeinsam für alle Verschlüsselungsstufen oder am Ende jeder einzelnen Verschlüsselungsstufe für diese Verschlüsselungsstufe ausgegeben werden. Die Ausgabe kann wahlweise separat von dem zu verschlüsselnden Datenpaket erfolgen. Alternativ kann die Zufallsdaten-Charakteristik dem zu verschlüsselnden Datenpaket auch hinzugefügt werden.

Um die Integrität der verschlüsselten Datenpakete bei einer nachfolgenden Entschlüsselung prüfen zu können, kann wenigstens eine Verschlüsselungsstufe vor der Verschlüsselung ferner die Schritte eines Berechnens eines Kontrollwerts für das zu verschlüsselnde Datenpaket und eines Ausgebens des Kontrollwerts zusammen mit dem zu verschlüsselnden Datenpaket umfassen.

Dabei kann der Kontrollwert vorzugsweise mathematisch aus dem zu verschlüsselnden Datenpaket berechnet werden. Dies kann beispielsweise mittels eines "Hash-Algorithmus" oder "Checksum-Algorithmus" erfolgen. Die Ausgabe des Kontrollwerts kann wahlweise separat von dem zu verschlüsselnden Datenpaket erfolgen. Alternativ kann der Kontrollwert dem zu verschlüsselnden Datenpaket auch hinzugefügt werden. Die Ausgabe kann wahlweise am Ende der letzten Verschlüsselungsstufe gemeinsam für alle Verschlüsselungsstufen oder am Ende jeder einzelnen Verschlüsselungsstufe für diese Verschlüsselungsstufe erfolgen.

Gemäß der vorliegenden Erfindung weist ein Verfahren zur Entschlüsselung von mehrfach verschlüsselten Datenpaketen eines Datenstroms die folgenden Schritte auf: Detektieren wenigstens einer dem mehrfach verschlüsselten Datenpaket zugeordneten unverschlüsselten Schlüsselungs-Charakteristik, welche Schlüsselungs-Charakteristik wenigstens einen Schlüsselungsalgorithmus und einen zugeordneten Kodierschlüssel angibt und sequentielles Entschlüsseln des zu entschlüsselnden Datenpakets in wenigstens zwei aufeinander folgenden Entschlüsselungsstufen unter Verwendung des in der wenigstens einen Schlüsselungs-Charakteristik angegebenen wenigstens einen Schlüsselungsalgorithmus und zugeordneten Kodierschlüssels.

Die Zuordnung der Schlüsselungs-Charakteristik zu dem verschlüsselten Datenpaket kann dabei wahlweise explizit (beispielsweise durch Verweis auf das zugeordnete Datenpaket) oder implizit (beispielsweise durch zeitliche Korrelation des Empfangens von Schlüsselungs-Charakteristik und verschlüsseltem Datenpaket) erfolgen. Alternativ zu einer separaten Übermittlung der Schlüsselungs-Charakteristik kann diese dem verschlüsselten Datenpaket auch unverschlüsselt hinzugefügt sein.

Die Schlüsselungs-Charakteristik kann für alle Entschlüsselungsstufen gemeinsam vorgesehen sein. In diesem Fall gibt die Schlüsselungs-Charakteristik zusätzlich die Reihenfolge der zu verwendenden Schlüsselungsalgorithmen und zugeordneten Kodierschlüssel an.

Alternativ kann die Schlüsselungs-Charakteristik auch für jede Entschlüsselungsstufe separat vorgesehen sein. In diesem Fall kann jede Entschlüsselungsstufe die Schritte des Detektierens einer dem jeweiligen zu entschlüsselnden Datenpaket zugeordneten unverschlüsselten Schlüsselungs-Charakteristik und des Entschlüsselns des zu entschlüsselnden Datenpakets in der jeweiligen Entschlüsselungsstufe unter Verwendung des in der detektierten Schlüsselungs-Charakteristik jeweils angegebenen Schlüsselungsalgorithmus und zugeordneten Kodierschlüssels aufweisen. In diesem Fall ist es daher nicht nötig, dass die Schlüsselungs-Charakteristik eine Reichenfolge der zu verwendenden Schlüsselungsalgorithmen und zugeordneten Kodierschlüssel explizit angibt.

Am Ende einer jeweiligen Entschlüsselungsstufe entspricht das entschlüsselte Datenpaket vorzugsweise dem originären Datenpaket, welches mittels des Schlüsselungsalgorithmus und Kodierschlüssels verschlüsselt wurde, um ein verschlüsseltes Datenpaket zu bilden.

Dabei kann wenigstens eine Entschlüsselungsstufe die folgenden Schritte umfassen: Detektieren einer dem Datenpaket zugeordneten unverschlüsselten Segmentier-Charakteristik, wobei die Segmentier-Charakteristik Datenpakete bezeichnet, die Segmente eines einzelnen Gesamtdatenpakets sind. Bilden des Gesamtdatenpakets anhand der entschlüsselten Datenpakete und der Segmentier-Charakteristik nach dem Entschlüsseln und Verwenden des Gesamtdatenpakets anstelle des Datenpakets. In Abhängigkeit von dem Inhalt der Segmentier-Charakteristik können die vorstehenden Schritte wahlweise in jeder Entschlüsselungsstufe oder nach Abschluss aller Entschlüsselungsstufen ausgeführt werden.

Weiter kann es vorteilhaft sein, wenn wenigstens eine Entschlüsselungsstufe ein Detektieren einer unverschlüsselten Block-Charakteristik in dem Datenpaket nach dem Entschlüsseln umfasst, wobei die Block-Charakteristik in dem Datenpaket ein im weiteren Verfahren zu verwendendes Datenpaket kennzeichnet.

Dieser Schritt kann in jeder Entschlüsselungsstufe vorgesehen sein. Bei Verwendung von Algorithmen mit gleichen Blockgrößen kann dieser Schritt alternativ jedoch auch für alle Entschlüsselungsstufen gemeinsam vorgesehen sein, und nach Abschluss aller Entschlüsselungsstufen ausgeführt werden. Dann wird ein Aufblähen der Datenpakete durch Hinzufügen der Block-Charakteristik vermieden, da die Block-Charakteristik den zu entschlüsselnden Daten nur einmal hinzugefügt wird.

Weiter können die Schritte des Aufteilens eines Haupt-Kodierschlüssels in mehrere unterschiedliche Teil-Kodierschlüssel in Abhängigkeit von der jeweiligen Schlüsselungs-Charakteristik und des Zuordnens jeweils eines Teil-Kodierschlüssels zu jeweils einem Schlüsselungsalgorithmus in jeweils einer Entschlüsselungsstufe in Abhängigkeit von der jeweiligen Schlüsselungs-Charakteristik in dem erfindungsgemäßen Verfahren vorgesehen sein. Die mit der Aufteilung eines Haupt-Kodierschlüssels in mehrere Teil-Kodierschlüssel verbundenen Vorteile wurden bereits vorstehend erläutert.

Zudem kann wenigstens eine Entschlüsselungsstufe umfassen: Detektieren einer dem Datenpaket zugeordneten unverschlüsselten Zufallsdaten-Charakteristik, wobei die Zufallsdaten-Charakteristik einen mit Zufallsdaten gefüllten Bereich des Datenpakets angibt und Entfernen der Zufallsdaten aus dem Datenpaket nach dem Entschlüsseln unter Verwendung der detektierten Zufallsdaten-Charakteristik. In Abhängigkeit von dem Inhalt der Zufallsdaten-Charakteristik kann dieser Schritt wahlweise in jeder Entschlüsselungsstufe oder nach Abschluss aller Entschlüsselungsstufen für alle Entschlüsselungsstufen gemeinsam erfolgen.

Es kann vorteilhaft sein, wenn wenigstens eine Entschlüsselungsstufe nach dem Entschlüsseln zudem die Schritte eines Detektierens eines dem Datenpaket zugeordneten Kontrollwerts, eines Berechnens eines Prüfwerts unter Verwendung von in dem Datenpaket enthaltenen Daten und eines Vergleichens des Kontrollwerts mit dem Prüfwert umfasst. Dann wird das Datenpaket vorzugsweise verworfen, wenn der Kontrollwert nicht mit dem Prüfwert übereinstimmt, da die Integrität oder korrekte Entschlüsselung des Datenpakets nicht sichergestellt ist.

Es ist wichtig zu betonen, dass der Begriff des Verwerfens des Datenpakets nicht einschränkend in der Form auszulegen ist, dass das Datenpaket beispielsweise sofort gelöscht wird. Alternativ kann es ausreichend sein, das Datenpaket beispielsweise durch Hinzufügen eines Markers als fehlerhaft oder zu verwerfend zu markieren. Über die Weiterverarbeitung eines mit einem entsprechenden Marker versehenen Datenpakets kann dann später entschieden werden. Beispielsweise kann das markierte Datenpaket nicht weitergeleitet, nicht weiterverarbeitet oder gelöscht werden.

Allgemein kann es vorteilhaft sein, wenn die Schlüsselungs-Charakteristik die Reihenfolge aller im Rahmen der sequentiellen Verschlüsselung bzw. Entschlüsselung in den unterschiedlichen Verschlüsselungsstufen bzw. Entschlüsselungsstufen verwendeten Schlüsselungsalgorithmen mit den jeweils zugehörigen Kodierschlüsseln angibt. In diesem Fall braucht die Schlüsselungs-Charakteristik nicht für alle unterschiedlichen Verschlüsselungsstufen bzw. Entschlüsselungsstufen gesondert vorgesehen zu sein. Hierdurch wird ein unnötiges Aufblähen der zu verarbeitenden Daten aufgrund des Ausgebens / Hinzufügens der Schlüsselungs-Charakteristik vermieden. Im einfachsten Fall kann die Angabe der Reihenfolge durch einfache Aufzählung der die Schlüsselungsalgorithmen bezeichnenden Namen erfolgen.

Es kann vorteilhaft sein, wenn die Ausgabe von Schlüsselungs-Charakteristik, Segmentier-Charakteristik und Zufallsdaten-Charakteristik für ein zu verschlüsselndes Datenpaket gemeinsam als Sammel-Charakteristik erfolgt.

Eine derartige Sammel-Charakteristik enthält dann alle für eine Verschlüsselung bzw. Entschlüsselung wichtigen Angaben und kann ggf. von einer übergeordneten Instanz / Vorrichtung verarbeitet werden. Dabei kann die Sammel-Charakteristik wahlweise für alle Verschlüsselungs- bzw. Entschlüsselungsstufen getrennt oder für alle aufeinander folgenden Verschlüsselungs- bzw. Entschlüsselungsstufen gemeinsam vorgesehen sein.

Allgemein kann vorgesehen sein, dass ein im Rahmen einer vorangegangenen Verschlüsselungsstufe der sequentiellen Verschlüsselung erhaltenes verschlüsseltes Datenpaket das in einer nachfolgenden Verschlüsselungsstufe der sequentiellen Verschlüsselung zu verschlüsselnde Datenpaket ist. Entsprechend kann vorgesehen sein, dass ein im Rahmen einer vorangegangenen Entschlüsselungsstufe der sequentiellen Entschlüsselung erhaltenes Datenpaket das in einer nachfolgenden Entschlüsselungsstufe der sequentiellen Entschlüsselung zu entschlüsselnde Datenpaket ist.

Eine besonders hohe Sicherheit wird erreicht, wenn die unterschiedlichen Schlüsselungsalgorithmen und/oder Kodierschlüssel voneinander unabhängig sind. Das heißt, dass die unterschiedlichen Schlüsselungsalgorithmen und/oder Kodierschlüssel beispielsweise nicht durch mathematische Verfahren voneinander ableitbar sind.

Beispiele für geeignete Schlüsselungsalgorithmen sind Blowfish, AES, DES, 3DES und Twofish. Ein Beispiel für geeignete Kodierschlüssel sind unterschiedliche Zufallszahlen. Es wird betont, dass die vorliegende Erfindung jedoch nicht auf diese Beispiele beschränkt ist.

Die vorstehende Aufgabe wird auch durch eine Signalfolge gelöst, welche die Ausführung des Verfahrens nach einem der Ansprüche 1 bis 20 veranlasst, wenn sie in einen Datenverarbeiter, insbesondere einen Mikroprozessor, einer Datenverarbeitungseinrichtung geladen ist. Eine derartige Signalfolge kann beispielsweise in Form eines Computerprogrammproduktes auf einem Datenträger gespeichert oder über ein Übertragungsnetzwerk abrufbar sein.

Weiter wird die vorstehende Aufgabe durch ein Datenverarbeitungssystem gelöst, wobei das Datenverarbeitungssystem wenigstens Datenpakete eines Datenstroms empfängt und die empfangenen Datenpakete gemäß einer vorgegebenen Vorschrift verarbeitet. Dabei ist das Datenverarbeitungssystem erfindungsgemäß dazu programmiert und eingerichtet, das Verfahren nach einem der Ansprüche 1 bis 20 auszuführen.

Dabei können die vorstehenden Schritte wahlweise durch ein gemeinsames Datenverarbeitungssystem oder aber auch durch über- bzw. untergeordnete Datenverarbeitungssysteme ausgeführt werden. So kann beispielsweise ein übergeordnetes Datenverarbeitungssystem (d.h. eine übergeordnete Instanz) vorgesehen sein, welches die Schlüsselungs-Charakteristik erstellt bzw. detektiert.

Gemäß einer ersten Ausführungsform umfasst das Datenverarbeitungssystem eine Speichereinrichtung, in welcher wenigstens zwei unterschiedliche Kodierschlüssel gespeichert sind, wenigstens zwei Datenverarbeiter, die jeweils eine fest-kodierte Schaltungslogik aufweisen, welche Schaltungslogik jeweils unterschiedliche Schlüsselungsalgorithmen zur Verarbeitung eines empfangenen Datenpakets unter Verwendung eines Kodierschlüssels implementiert und ein Schaltnetzwerk, um die Datenverarbeiter wahlweise seriell zu verbinden, wobei die Reihenfolge änderbar ist. Weiter umfasst das Datenverarbeitungssystem eine Steuereinrichtung, welche das Schaltnetzwerk und die wenigstens zwei Datenverarbeiter steuert, wenigstens die Datenpakete des Datenstroms empfängt und an einen ersten der wenigstens zwei Datenverarbeiter ausgibt, sowie aus der Speichereinrichtung unterschiedliche Kodierschlüssel ausliest und an die Datenverarbeiter ausgibt.

Somit kann das Datenverarbeitungssystem gemäß der ersten Ausführungsform mehrere seriell variabel verschaltbare, festkodierte Schaltungslogiken aufweisen, welche jeweils unterschiedliche Schlüsselungsalgorithmen implementieren und so eine Verschlüsselung bzw. Entschlüsselung der zu verarbeitenden Datenpakete in schaltungstechnisch aufeinander folgenden Stufen bewirken. Es wird betont, dass die Speichereinrichtung auch ein einfacher Eingangsbuffer (ein Buffer ist ein Speicher für die Zwischenlagerung von Daten) sein kann, um über eine separate Eingabeschnittstelle empfangene Kodierschlüssel zwischenzuspeichern. Die Speichereinrichtung muss dabei nicht dauerhaft in das Datenverarbeitungssystem integriert sein, sondern kann auch ein über eine Schnittstelle mit dem Datenverarbeitungssystem verbindbares separates Speichermedium sein.

In dieser Ausführungsform kann es vorteilhaft sein, wenn jeder Datenverarbeiter einen Buffer zum Zwischenspeichern von verarbeiteten Datenpaketen aufweist, wobei die Größe des Buffers von einem jeweiligen Anwendungsfall des erfindungsgemäßen Datenverarbeitungssystems abhängt.

Durch das Vorsehen der Buffer können die Schaltungslogiken im wesentlichen unabhängig voneinander und somit auch gleichzeitig arbeiten. Diese Möglichkeit der parallelen Verarbeitung von unterschiedlichen Datenpaketen in unterschiedlichen Schaltungslogiken und damit unterschiedlichen Verarbeitungsstufen ist gerade bei der Verarbeitung von Datenpaketen eines Datenstroms von großer Bedeutung, da ständig neue Datenpakete des Datenstroms empfangen und verarbeitet werden müssen.

Die Anpassung eines jeweiligen Buffers an den jeweiligen Anwendungsfall des erfindungsgemäßen Datenverarbeitungssystems kann auf vielerlei Weise erfolgen. Beispielsweise kann eine Anpassung an die Größe der von dem erfindungsgemäßen Datenverarbeitungssystem von außen (z.B. von einem Übertragungsnetzwerk oder einem Computerprogramm) empfangenen Datenpakete erfolgen. Da ein von dem jeweiligen Datenverarbeiter implementierter Schlüsselungsalgorithmus aber jeweils nur eine vorgegebene Blockgröße auf einmal verarbeiten kann, kann die Anpassung beispielsweise auch an die Blockgröße des jeweiligen Schlüsselungsalgorithmus erfolgen.

Gemäß einer zweiten Ausführungsform umfasst das Datenverarbeitungssystem eine Speichereinrichtung, in welcher wenigstens zwei unterschiedliche Kodierschlüssel und wenigstens zwei unterschiedliche Schlüsselungsalgorithmen gespeichert sind, wenigstens zwei Datenverarbeiter, die jeweils eine programmierbare Schaltungslogik zum Verarbeiten empfangener Datenpakete aufweisen und ein Verbindungsnetz, welches die Datenverarbeiter seriell mit einer vorgegebenen Reihenfolge verbindet. Weiter umfasst das Datenverarbeitungssystem eine Steuereinrichtung, welche die wenigstens zwei Datenverarbeiter steuert, aus der Speichereinrichtung unterschiedliche Schlüsselungsalgorithmen ausliest und die Schaltungslogiken der Datenverarbeiter entsprechend programmiert, wenigstens die Datenpakete des Datenstroms empfängt und an einen ersten der wenigstens zwei Datenverarbeiter ausgibt, sowie aus der Speichereinrichtung unterschiedliche Kodierschlüssel ausliest und an die Datenverarbeiter ausgibt. Dabei verarbeiten die gemäß eines jeweiligen Schlüsselungsalgorithmus programmierten Schaltungslogiken der jeweiligen Datenverarbeiter die jeweils empfangenen Datenpakete unter Verwendung des jeweiligen empfangenen Kodierschlüssels.

Somit kann das Datenverarbeitungssystem gemäß der zweiten Ausführungsform eine Mehrzahl von seriell fest verschalteten, aber frei programmierbaren Schaltungslogiken aufweisen. Auch bei dieser Ausführungsform kann die Speichereinrichtung beispielsweise ein Eingangsbuffer sein oder in Form eines über eine Schnittstelle mit dem Datenverarbeitungssystem verbindbaren Speichermediums ausgebildet sein. Indem die Steuereinrichtung die Schaltungslogiken der Datenverarbeiter gemäß unterschiedlicher Schlüsselungsalgorithmen programmiert und so steuert, dass die jeweiligen Datenverarbeiter die jeweils empfangenen Datenpakete unter Verwendung des jeweiligen empfangenen Kodierschlüssels verarbeiten, wird eine Verschlüsselung bzw. Entschlüsselung der zu verarbeitenden Datenpakete in schaltungstechnisch aufeinander folgenden Stufen bewirkt.

Dabei kann es vorteilhaft sein, wenn jeder Datenverarbeiter ferner wenigstens eine Eingangs-Schnittstelle zum Empfangen von zu verarbeitenden Datenpaketen und eine Ausgangs-Schnittstelle zum Ausgeben von verarbeiteten Datenpaketen aufweist, wobei wenigstens die Ausgangs-Schnittstelle des ersten Datenverarbeiters über das Schaltnetzwerk bzw. das Verbindungsnetz mit der Eingangs-Schnittstelle eines zweiten Datenverarbeiters verbunden ist.

Anders ausgedrückt steuert die Steuereinrichtung das Schaltnetzwerk so, dass die unterschiedlichen Datenverarbeiter seriell hintereinander geschaltet sind. In der Folge durchlaufen die zu verarbeitenden Daten nacheinander mehrere Datenverarbeiter.

Gemäß einer dritten Ausführungsform umfasst das Datenverarbeitungssystem eine Speichereinrichtung, in welcher wenigstens zwei unterschiedliche Kodierschlüssel und wenigstens zwei unterschiedliche Schlüsselungsalgorithmen gespeichert sind und einen Datenverarbeiter mit einer programmierbaren Schaltungslogik zum Verarbeiten empfangener Datenpakete. Weiter umfasst das Datenverarbeitungssystem eine Steuereinrichtung, welche wenigstens die Datenpakete des Datenstroms empfängt, aus der Speichereinrichtung zeitlich nacheinander unterschiedliche Schlüsselungsalgorithmen ausliest und die Schaltungslogik des Datenverarbeiter entsprechend programmiert, sowie aus der Speichereinrichtung zeitlich nacheinander unterschiedliche Kodierschlüssel ausliest und zusammen mit zu verarbeitenden Daten an den Datenverarbeiter ausgibt. Dabei erhält die Steuereinrichtung weiter von dem Datenverarbeiter unter Verwendung des jeweiligen Kodierschlüssels und Schlüsselalgorithmus verarbeitete Daten. Die Steuereinrichtung gibt die von dem Datenverarbeiter empfangenen verarbeiteten Daten wenigstens einmal an den Datenverarbeiter aus und steuert diesen so, dass der Datenverarbeiter ein von der Steuerungseinrichtung empfangenes zu verarbeitendes Datenpaket wenigstens zweimal zeitlich hintereinander unter Verwendung unterschiedlicher Schlüsselungsalgorithmen und unterschiedlicher Kodierschlüssel verarbeitet.

Somit kann das Datenverarbeitungssystem gemäß der dritten Ausführungsform auch lediglich einen einzigen programmierbaren Datenverarbeiter aufweisen. In diesem Fall werden die zu verarbeitenden Datenpakete mehrmals hintereinander unter Verwendung unterschiedlicher Schlüsselungsalgorithmen und Kodierschlüssel durch die programmierbare Schaltungslogik des Datenverarbeiters verarbeitet und so in mehreren zeitlich aufeinander folgenden Stufen verschlüsselt bzw. entschlüsselt. Auch bei dieser Ausführungsform kann die Speichereinrichtung beispielsweise ein Eingangsbuffer sein, oder in Form eines über eine Schnittstelle mit dem Datenverarbeitungssystem verbindbaren separaten Speichermediums ausgebildet sein.

Handelt es sich bei den zu verarbeitenden Daten um zu verschlüsselnde Daten, kann es in allen drei Ausführungsformen vorteilhaft sein, wenn die Steuereinrichtung beim Empfang eines zu verschlüsselnden Datenpakets automatisch eine Anzahl, Art und vorzugsweise Reihenfolge von in aufeinander folgenden Verschlüsselungsstufen (d.h. schaltungstechnisch oder zeitlich aufeinander folgenden Verarbeitungsvorgängen durch den wenigstens einen Datenverarbeiter) zu verwendenden unterschiedlichen Schlüsselungsalgorithmen bestimmt, in den aufeinander folgenden Verschlüsselungsstufen zu verwendende unterschiedliche Kodierschlüssel bestimmt sowie jeweils einen Kodierschlüssel zu jeweils einem Schlüsselungsalgorithmus in jeweils einer Verschlüsselungsstufe zuordnet. Dabei steuert die Steuereinrichtung weiter den wenigstens einen Datenverarbeiter entsprechend, um ein mehrfach verschlüsseltes Datenpaket zu erhalten. Weiter erstellt die Steuereinrichtung automatisch eine unverschlüsselte Schlüsselungs-Charakteristik, welche Schlüsselungs-Charakteristik wenigstens den zeitlich zuletzt verwendeten Schlüsselungsalgorithmus und den zugeordneten Kodierschlüssel angibt, und gibt die Schlüsselungs-Charakteristik zusammen mit dem mehrfach verschlüsselten Datenpaket aus.

Vorzugsweise kann die Ausgabe der Schlüsselungs-Charakteristik so ausgestaltet sein, dass eine implizite oder explizite Zuordnung der Schlüsselungs-Charakteristik zu dem jeweiligen Datenpaket erfolgt. Die Ausgabe kann wahlweise in für jede Verschlüsselungsstufe getrennt in jeder Verschlüsselungsstufe oder für alle Verschlüsselungsstufen gemeinsam am Ende der letzten Verschlüsselungsstufe erfolgen. Alternativ zu einer separaten Ausgabe kann die Steuereinrichtung die erzeugte unverschlüsselte Schlüsselungs-Charakteristik beispielsweise automatisch zu dem jeweiligen verschlüsselten Datenpaket hinzufügen und so eine Zuordnung herstellen.

Handelt es sich bei den zu verarbeitenden Daten hingegen um zu entschlüsselnde Daten, kann es in allen drei Ausführungsformen vorteilhaft sein, wenn die Steuereinrichtung beim Empfang von zu entschlüsselnden mehrfach verschlüsselten Datenpaketen automatisch wenigstens eine dem Datenpaket zugeordnete unverschlüsselte Schlüsselungs-Charakteristik detektiert, welche Schlüsselungs-Charakteristik wenigstens einen Schlüsselungsalgorithmus und einen zugeordneten Kodierschlüssel angibt. Dann steuert die Steuereinrichtung den wenigstens einen Datenverarbeiter so, dass dieser das zu entschlüsselnde Datenpaket sequentiell in wenigstens zwei aufeinander folgenden Entschlüsselungsstufen unter Verwendung des in der wenigstens einen Schlüsselungs-Charakteristik angegebenen wenigstens einen Schlüsselungsalgorithmus und zugeordneten Kodierschlüssels entschlüsselt.

Die Schlüsselungs-Charakteristik kann dabei wahlweise für alle Entschlüsselungsstufen gemeinsam oder für jede Entschlüsselungsstufe getrennt vorgesehen sein. Ist die Schlüsselungs-Charakteristik für alle Entschlüsselungsstufen gemeinsam vorgesehen, kann es vorteilhaft sein, wenn die Schlüsselungs-Charakteristik eine Reihenfolge der zu verwendenden Schlüsselungsalgorithmen vorgibt.

Nachfolgend werden bevorzugte Ausführungsformen der vorliegenden Erfindung unter Bezugnahme auf die beigefügten Zeichnungen kurz beschrieben. Soweit möglich werden in den Zeichnungen gleiche oder ähnliche Bezugszeichen verwendet, um auf gleiche oder ähnliche Elemente zu verweisen. Dabei zeigt:
- Figur 1: schematisch den Aufbau eines Kommunikationsnetzwerks, in dem das erfindungsgemäße Datenverarbeitungssystem Verwendung findet;
- Figur 2: schematisch den Aufbau eines Datenverarbeitungssystems gemäß einer ersten bevorzugten Ausführungsform der vorliegenden Erfindung;
- Figur 3: schematisch den Aufbau eines Datenverarbeitungssystems gemäß einer zweiten bevorzugten Ausführungsform der vorliegenden Erfindung;
- Figur 4: schematisch den Aufbau eines Datenverarbeitungssystems gemäß einer dritten bevorzugten Ausführungsform der vorliegenden Erfindung;

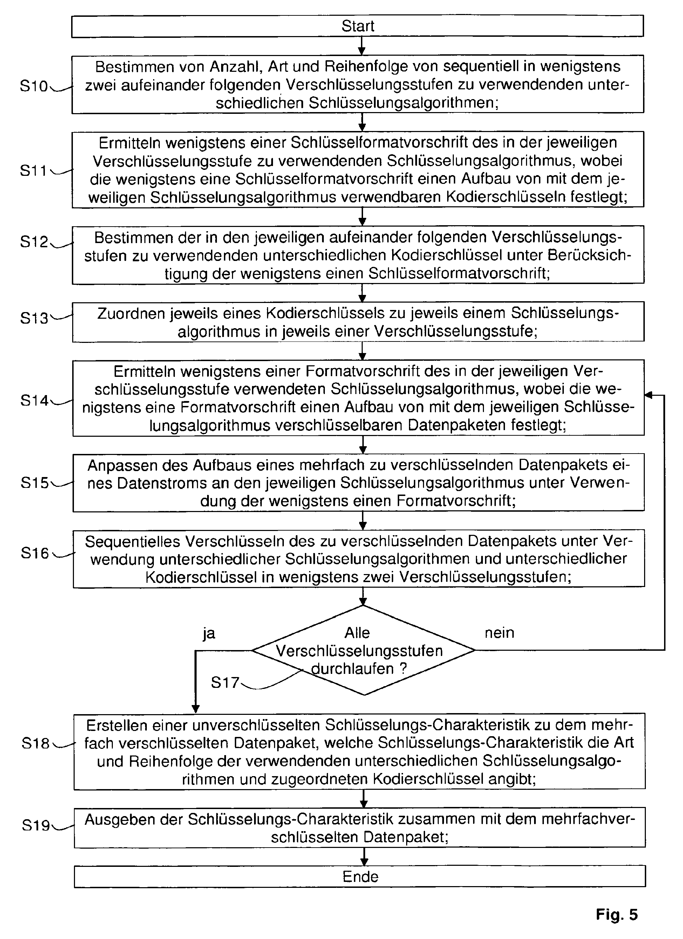

- Figur 5: ein Flussdiagramm einer bevorzugten Ausführungsform des erfindungsgemäßen Verfahrens zur Verschlüsselung von Datenpaketen eines Datenstroms;

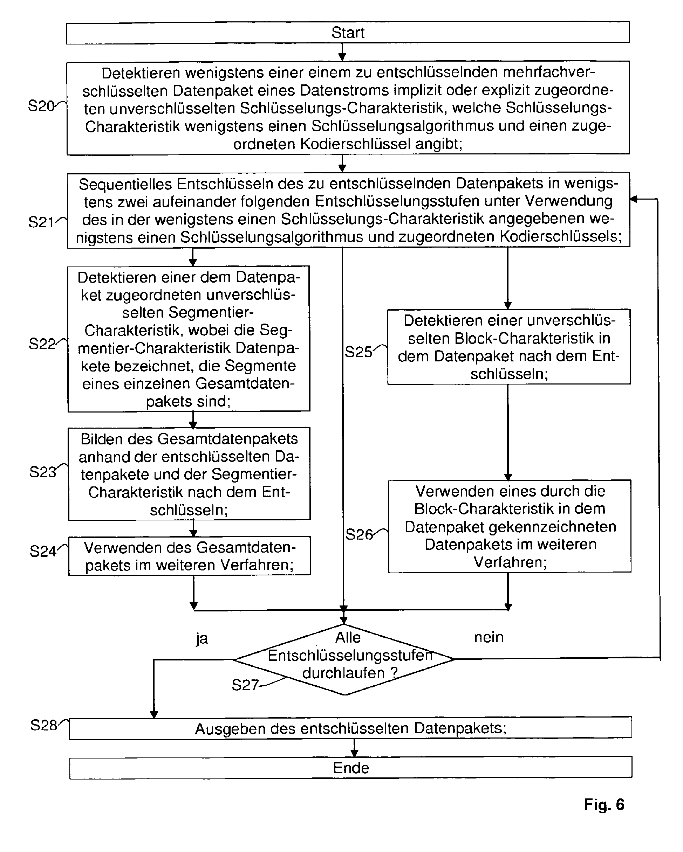

- Figur 6: ein Flussdiagramm einer bevorzugten Ausführungsform des erfindungsgemäßen Verfahrens zur Entschlüsselung von mehrfach verschlüsselten Datenpaketen eines Datenstroms; und
- Figur 7A, Figur 7B: jeweils ein Flussdiagramm, welches die Verwendung eines Kontrollwerts darstellt.

Im Folgenden werden unter Bezugnahme auf die beigefügten Zeichnungen bevorzugte Ausführungsformen des erfindungsgemäßen Verfahrens und des erfindungsgemäßen Datenverarbeitungssystems beschrieben. Da das erfindungsgemäße Datenverarbeitungssystem ausdrücklich dazu programmiert und eingerichtet ist, das vorstehend beschriebene erfindungsgemäße Verfahren auszuführen, werden Vorrichtung und Verfahren gemeinsam betrachtet.

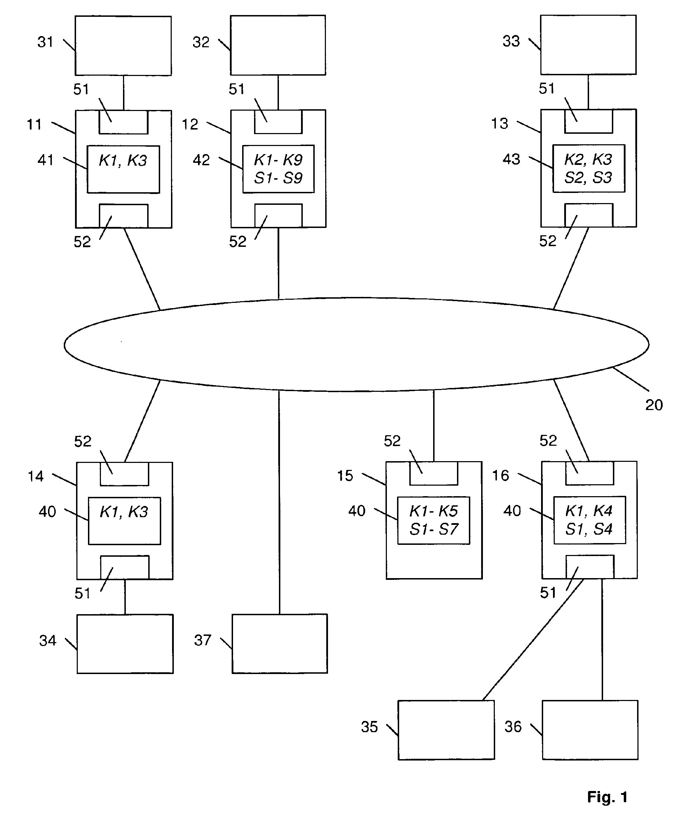

Dabei eignen sich die erfindungsgemäßen Datenverarbeitungssysteme besonders gut zur Verwendung in einem Kommunikationsnetzwerk, wie es in Figur 1 gezeigt ist.

Bei dem Kommunikationsnetzwerk sind eine Mehrzahl von Kommunikationsschnittstellen 31, 32, 33, 34, 35, 36, 37 zum gegenseitigen Datenaustausch über ein Übertragungsnetzwerk 20 miteinander verbundenen. In dem gezeigten Beispiel sind die Kommunikationsschnittstellen 31-37 Personalcomputer und ist das Übertragungsnetzwerk 20 ein TCP/IP Netzwerk.

Zwischen den Kommunikationsschnittstellen 31-36 und dem Übertragungsnetzwerk 20 ist jeweils ein erfindungsgemäßes Datenverarbeitungssystem 11, 12, 13, 14, 16 angeordnet. Zum Verbinden mit dem Übertragungsnetzwerk 20 bzw. den Kommunikationsschnittstellen 31-36 weisen die Datenverarbeitungssysteme 11-14, 16 jeweils zwei Schnittstellen 51 und 52 auf. Die empfangenen Datenpakete werden in den Datenverarbeitungssystemen 11-16 gemäß einer vorgegebenen Vorschrift verarbeitet, wie im Folgenden erläutert werden wird.

Das Datenverarbeitungssystem 15 ist in diesem Beispiel selber ein Personalcomputer und daher nicht eigens mit einer Kommunikationsschnittstelle verbunden.

Jedes Datenverarbeitungssystem 11-16 weist eine Speichereinrichtung 40, 41, 42, 43 auf, in der jeweils wenigstens zwei unterschiedliche Kodierschlüssel K1-K9 gespeichert sind. Je nach Ausgestaltung der Datenverarbeitungssysteme 11-16 können in der Speichereinrichtung 40, 41, 42, 43 zusätzlich auch wenigstens zwei unterschiedliche Schlüsselungsalgorithmen S1, S2, S3 gespeichert sein. In den folgenden Beispielen handelt es sich bei den unterschiedlichen Kodierschlüsseln K1-K9 um vorgegebene Zufallsdaten und den unterschiedlichen Schlüsselungsalgorithmen S1, S2, S3 um die Algorithmen "Blowfish", "AES" und "Twofish". Es können jedoch auch beliebige andere, vorzugsweise herkömmliche standardisierte Algorithmen verwendet werden.

Ein vergleichbares Kommunikationsnetzwerk ist in der am 21. September 2005 eingereichten Patentanmeldung DE 10 2005 046 462, auf deren Inhalt ausdrücklich vollumfänglich Bezug genommen wird, beschrieben. Dabei sind die erfindungsgemäßen Datenverarbeitungssysteme 11-16 vorzugsweise in die in dieser Anmeldung beschriebenen Netzwerkkomponenten integriert. Dann kann es vorteilhaft sein, wenn die erfindungsgemäßen Datenverarbeitungssysteme 11-16 keine vollständigen (d.h. einen Protokolldatenteil und einen Nutzdatenteil aufweisende) Datenpakete des Datenstroms, sondern nur Nutzdatenteile verarbeiten.

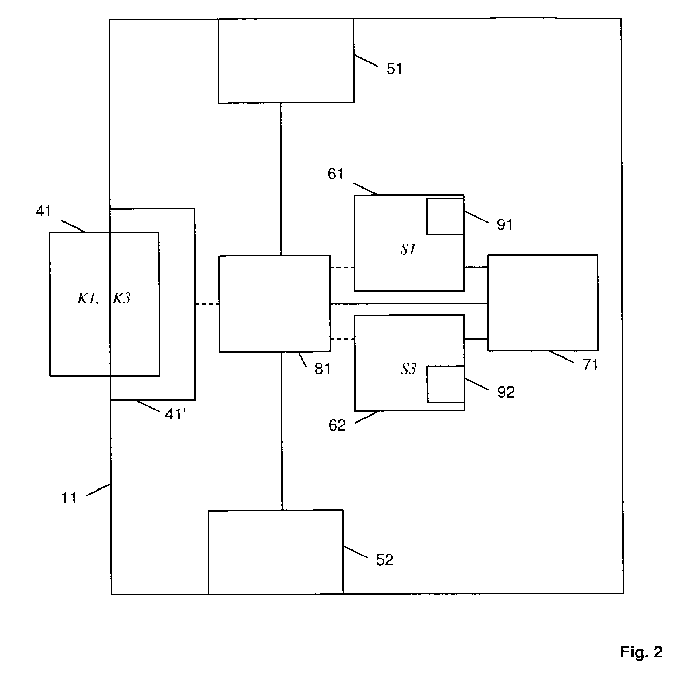

Im Folgenden wird bezugnehmend auf Figur 2 der Aufbau eines Datenverarbeitungssystems gemäß einer ersten bevorzugten Ausführungsform der vorliegenden Erfindung beschrieben.

Das Datenverarbeitungssystem 11 weist neben der Speichereinrichtung 41, 41' und den Schnittstellen 51, 52, zwei Datenverarbeiter 61, 62, ein Schaltnetzwerk 71 und eine Steuereinrichtung 81 auf.

Wie bereits ausgeführt, dienen die Schnittstellen 51, 52 dazu, Datenpakete eines Datenstroms zu empfangen bzw. auszugeben und so das Datenverarbeitungssystem 11 mit dem Übertragungsnetzwerk 20 bzw. der Kommunikationsschnittstelle 31 zu verbinden.

In der in Figur 2 gezeigten Ausführungsform wird die Speichereinrichtung durch eine Chipkarte 41 und damit durch ein tragbares nichtflüchtiges Speichermedium gebildet, auf der zwei unterschiedliche Kodierschlüssel K1, K3 gespeichert sind. Die Chipkarte 41 ist über eine Speicherschnittstelle 41' mit dem Datenverarbeitungssystem 11 verbindbar. Durch Auswechseln der Chipkarte 41 können dem Datenverarbeitungssystem 11 verschiedene unterschiedliche Kodierschlüssel zur Verfügung gestellt werden.

Die beiden Datenverarbeiter 61, 62 weisen jeweils eine festkodierte Schaltungslogik in Form eines FGPA (Field Programmable Gate Array) auf, welche die unterschiedlichen Schlüsselungsalgorithmen S1, S3 "Blowfish" und "Twofish" implementieren. Weiter weist jeder Datenverarbeiter 61, 62 einen Buffer 91, 92 zum Zwischenspeichern von verarbeiteten Datenpaketen auf. Dabei ist die Größe der Buffer 91, 92 jeweils an eine Größe der von dem erfindungsgemäßen Datenverarbeitungssystem von dem Übertragungsnetzwerk 20 oder der Kommunikationsschnittstelle 31 empfangenen Datenpakete (z. B. 1500 Zeichen) angepasst. Die vorliegende Erfindung ist hierauf aber nicht beschränkt. Beispielsweise kann die Anpassung auch an eine mit dem jeweils implementierten Schlüsselungsalgorithmus S1, S3 verarbeitbare maximale Blockgröße der Datenpakete (z. B. 64 Zeichen bzw. 128 Zeichen) erfolgen.

Die beiden Datenverarbeiter 61, 62 sind wahlweise seriell über das Schaltnetzwerk 71 verbindbar. Im vorliegenden Beispiel kann das Schaltnetzwerk 71 die beiden Datenverarbeiter 61, 62 so verschalten, dass sich wahlweise die Reihenfolge Datenverarbeiter 61 gefolgt von Datenverarbeiter 62 oder Datenverarbeiter 62 gefolgt von Datenverarbeiter 61 ergibt.

Die Steuereinrichtung 81, welche im vorliegenden Beispiel ein Mikroprozessor ist, steuert das Schaltnetzwerk 71 und die beiden Datenverarbeiter 61, 62. In Figur 2 ist die Steuerung der beiden Datenverarbeiter 61, 62 (zum Beispiel durch Übermittlung von Kodierschlüsseln K1, K3) mit gestrichelter Linie dargestellt, wohingegen die durchgezogenen Linien Verbindungen symbolisieren, über welche Datenpakete (und ggf. Steuerbefehle) transportiert werden. Weiter empfängt die Steuereinrichtung 81 über die Schnittstellen 51, 52 die zu verarbeitenden Datenpakete des Datenstroms.

Dabei bestimmt (S10) die Steuereinrichtung 81 beim Empfang eines zu verschlüsselnden Datenpakets von der Kommunikationsschnittstelle 31 über die Schnittstelle 51 automatisch die Reihenfolge der in aufeinander folgenden Verschlüsselungsstufen zu verwendenden unterschiedlichen Schlüsselungsalgorithmen S1, S3 und damit die für die Verschlüsselung erforderliche Verschaltung der beiden Datenverarbeiter 61, 62. Im vorliegenden Fall soll die Verschaltung mittels des Schaltnetzwerks 71 derart sein, dass der Datenverarbeiter 62 dem Datenverarbeiter 61 vorangeht. Weiter liest die Steuereinrichtung 81 über die Speicherschnittstelle 41' aus der Chipkarte 41 die beiden unterschiedlichen Kodierschlüssel K1, K3 aus und gibt jeweils einen der beiden Kodierschlüssel K1, K3 an einen der beiden Datenverarbeiter 61, 62 aus (S13). Da die beiden Datenverarbeiter 61, 62 dauerhaft nur jeweils einen Schlüsselungsalgorithmus S1, S3 implementieren, ist die Wahl einer geeigneten Schlüssellänge durch die Steuereinrichtung 81 einfach möglich. Die Steuereinrichtung 81 bestimmt die in den aufeinander folgenden Verschlüsselungsstufen zu verwendenden Kodierschlüssel K1, K3 entsprechend (S12). Die Kodierschlüssel K1, K3 werden jeweils einem Schlüsselungsalgorithmus S1, S3 eines Datenverarbeiters 61, 62 und damit einer Verschlüsselungsstufe zugeordnet (S13).

Anhand der festgelegten zu verwendenden Schlüsselungsalgorithmen S1, S3 ermittelt (S14) die Steuereinrichtung 61 dann für jeden Schlüsselungsalgorithmus S1, S3 automatisch eine Formatvorschrift, welche einen Aufbau der mit dem jeweiligen Schlüsselungsalgorithmus S1, S3 verschlüsselbaren Datenpakete festlegt. Die Steuereinrichtung 61 passt den Aufbau des zu verschlüsselnden Datenpakets unter Verwendung der wenigstens einen Formatvorschrift in dieser Ausführungsform automatisch so an, dass das Datenpaket den Formvorschriften beider Schlüsselungsalgorithmen S1, S3 entspricht (S15).

Wenn die zu verschlüsselnden Datenpakete größer als eine definierte maximale Datenpaket-Größe sind oder die durch den ersten Datenverarbeiter 61 verschlüsselten Datenpakete größer als die definierte maximale Datenpaket-Größe sein werden, umfasst dieses Anpassen des zu verschlüsselnden Datenpakets ein Segmentieren des zu verschlüsselnden Datenpakets in mehrere zu verschlüsselnde Teildatenpakete und ein Verwenden der Teildatenpakete anstelle des zu verschlüsselnden Datenpakets. In diesem Fall erstellt die Steuereinrichtung 61 automatisch eine unverschlüsselte Segmentier-Charakteristik, welche Teildatenpakete bezeichnet, die durch Segmentieren eines einzelnen Datenpakets gewonnen wurden. In der gezeigten Ausführungsform fügt die Steuereinrichtung 61 die Segmentier-Charakteristik automatisch zu den jeweiligen segmentierten Teildatenpaketen hinzu und gibt sie so zusammen mit der Segmentier-Charakteristik aus.

Wenn die Größe der Buffer 91, 92 (anders als in dieser Ausführungsform) an die maximale auf einmal verarbeitbare Blockgröße der durch die Datenverarbeiter 61, 62 implementierten Schlüsselungsalgorithmen S1, S3 angepasst ist, so kann das Segmentieren beispielsweise erfolgen, wenn die zu verschlüsselnden Datenpakete größer als die Blockgröße der Schlüsselungsalgorithmen sind oder nach der Verschlüsselung durch den ersten Datenverarbeiter 61 sein werden.

Ist die Größe eines zu verschlüsselnden Datenpaketes ungleich einem Vielfachen der maximalen, auf einmal verarbeitbaren Blockgröße des jeweiligen Schlüsselungsalgorithmus, umfasst das Anpassen des zu verschlüsselnden Datenpakets ein Auffüllen des zu verschlüsselnden Datenblocks durch die Steuereinrichtung 61 an seinem Ende mit Zeichen, bis das jeweilige nächste Vielfache der Blockgröße erreicht ist. Parallel hierzu erstellt die Steuereinrichtung 61 eine Block-Charakteristik, welche das zu verschlüsselnde Datenpaket in dem Datenblock kennzeichnet, und fügt diese dem Datenblock hinzu. Anschließend verwendet die Steuereinrichtung 61 diesen angepassten Datenblock anstelle des zu verschlüsselnden Datenpakets.

Anschließend gibt die Steuereinrichtung 81 das zu verschlüsselnde Datenpaket über das Schaltnetzwerk 71 an den ersten der beiden Datenverarbeiter 61, 62 aus. Nach dem Verschlüsseln gibt der erste Datenverarbeiter 62 das einfach verschlüsselte Datenpaket über das Schaltnetzwerk 71 an den zweiten Datenverarbeiter 61 aus. Nach dem Verschlüsseln gibt der zweite Datenverarbeiter 62 das zweifach verschlüsselte Datenpaket über das Schaltnetzwerk 71 an die Steuereinrichtung 81 aus. Hierdurch wird eine sequentielle Verschlüsselung des Datenpaketes bewirkt (S16). Da die Datenverarbeiter 61, 62 fest seriell verdrahtet sind, erübrigt sich eine Prüfung, ob alle Verschlüsselungsstufen durchlaufen wurden (S17).

Die Steuereinrichtung 81 erstellt automatisch eine dem zweifach verschlüsselten Datenpaket zugeordnete unverschlüsselte Schlüsselungs-Charakteristik, welche die Art und Reihenfolge der von den Datenverarbeitern 61, 62 verwendeten Schlüsselungsalgorithmen S3, S2 und die zugeordneten Kodierschlüssel K3, K1 eindeutig angibt (S18). Diese Angabe erfolgt in diesem Beispiel in Form des Wortes "Two3Blow1" um anzugeben, dass die Daten zunächst mit dem Schlüsselalgorithmus S3 "Twofish" und dem Kodierschlüssel K3 und anschließend mit dem Schlüsselalgorithmus S1 "Blowfish" und dem Kodierschlüssel K1 verschlüsselt wurden. Somit ermöglicht die Schlüsselungs-Charakteristik in Verbindung mit den Schlüsselalgorithmen und Kodierschlüsseln ein Entschlüsseln der Daten.

Schließlich gibt die Steuereinrichtung 81 die Schlüsselungs-Charakteristik zeitgleich mit dem zweifach verschlüsselten Datenpaket über die Schnittstelle 52 an das Übertragungsnetzwerk 20 aus (S19) und stellt so eine implizite Zuordnung zu dem verschlüsselten Datenpaket her. Alternativ kann diese Zuordnung auch explizit sein.

Beim Empfang eines zu entschlüsselnden zweifach verschlüsselten Datenpakets von dem Übertragungsnetzwerk 20 über die Schnittstelle 52 detektiert die Steuereinrichtung 81 automatisch eine dem Datenpaket zugeordnete unverschlüsselte Schlüsselungs-Charakteristik (S20), welche die Art und Reihenfolge der bei der Verschlüsselung verwendeten Schlüsselungsalgorithmen und zugeordneten Kodierschlüssel angibt. In diesem Beispiel wird davon ausgegangen, dass die Schlüsselungs-Charakteristik "Two3Blow1" lautet, um anzugeben, dass das Datenpaket zunächst mit dem Schlüsselalgorithmus S3 "Twofish" und dem Kodierschlüssel K3 und anschließend mit dem Schlüsselalgorithmus S1 "Blowfish" und dem Kodierschlüssel K1 verschlüsselt wurde. Es ist offensichtlich, dass die Entschlüsselung in umgekehrter Reihenfolge erfolgen muss.

Alternativ kann die Schlüsselungs-Charakteristik auch weiter abstrahiert sein (z.B. in Form eines Zahlencodes).

Sowohl die beiden Schlüsselungsalgorithmen S1, S3 als auch die beiden Kodierschlüssel K1, K3 sind dem erfindungsgemäßen Datenverarbeitungssystem 11 in diesem Beispiel bekannt. Anderenfalls wäre eine Entschlüsselung mittels des Datenverarbeitungssystems 11 nicht möglich.

In Abhängigkeit von der Schlüsselungs-Charakteristik steuert die Steuereinrichtung 81 das Schaltnetzwerk 71 so, dass die Datenverarbeiter 61, 62 entsprechend seriell hintereinander geschaltet werden und gibt das zu entschlüsselnde Datenpaket über das Schaltnetzwerk 71 an den ersten der beiden Datenverarbeiter 61, 62 aus. Nach dem Entschlüsseln unter Verwendung des Schlüsselungsalgorithmus "Blowfish" und Kodierschlüssels K1 gibt der erste Datenverarbeiter 61 das einfach entschlüsselte Datenpaket über das Schaltnetzwerk 71 an den zweiten Datenverarbeiter 62 aus. Nach dem Entschlüsseln unter Verwendung des Schlüsselungsalgorithmus "Twofish" und Kodierschlüssels K3 gibt der zweite Datenverarbeiter 62 das zweifach entschlüsselte Datenpaket über das Schaltnetzwerk 71 an die Steuereinrichtung 81 aus. Somit wurde das zweifach verschlüsselte Datenpaket in Abhängigkeit von der Schlüsselungs-Charakteristik sequentiell in zwei aufeinander folgenden Entschlüsselungsstufen unter Verwendung unterschiedlicher Schlüsselungsalgorithmen und unterschiedlicher Kodierschlüssel entschlüsselt (S21).

Anschließend prüft die Steuereinrichtung 81, ob den entschlüsselten Daten neben der Schlüsselungs-Charakteristik eine weitere Charakteristik, beispielsweise eine Segmentier-Charakteristik oder eine Block-Charakteristik zugeordnet ist (S22, S25). Im vorliegenden Beispiel erfolgt die Zuordnung explizit und gemeinsam mit der Schlüsselungs-Charakteristik in einem separaten Datensatz, der die weiteren Charakteristika enthält. Alternativ können diese weiteren Charakteristika den Datenpaketen auch direkt hinzugefügt und so zugeordnet sein.

Ist den entschlüsselten Daten keine weitere Charakteristik zugeordnet, gibt die Steuereinrichtung 81 das zweifach entschlüsselte Datenpaket über die Schnittstelle 51 an die zugeordnete Kommunikationsschnittstelle 31 aus (S28).

Detektiert die Steuereinrichtung 81 hingegen eine dem Datenpaket zugeordnete unverschlüsselte Segmentier-Charakteristik, wobei die Segmentier-Charakteristik Datenpakete bezeichnet, die Segmente eines einzelnen Gesamtdatenpakets sind (S22), so bildet die Steuereinrichtung 81 anhand der entschlüsselten Datenpakete und der Segmentier-Charakteristik zunächst das Gesamtdatenpakets (S23). Anschließend verwendet die Steuereinrichtung 81 das Gesamtdatenpaket anstelle des entschlüsselten Datenpakets (S24) und gibt dieses über die Schnittstelle 51 an die zugeordnete Kommunikationsschnittstelle 31 aus (S28).

Detektiert die Steuereinrichtung 81 hingegen eine dem Datenpaket zugeordnete unverschlüsselte Block-Charakteristik, wobei die Block-Charakteristik in dem Datenpaket ein im weiteren Verfahren zu verwendendes Datenpaket kennzeichnet (S25), so verwendet die Steuereinrichtung 81 das durch die Block-Charakteristik bezeichnete Datenpaket (S26) und gibt dieses über die Schnittstelle 51 an die zugeordnete Kommunikationsschnittstelle 31 aus (S28).

Es ist offensichtlich, dass auf die Verwendung der Schlüsselungs-Charakteristik verzichtet werden kann, wenn die Datenverarbeiter miteinander dauerhaft in einer vorgegebenen Reihenfolge verbunden sind und die unterschiedlichen Kodierschlüssel den Datenverarbeitern dauerhaft zugewiesen sind. In einem solchen Fall ist es ausreichend, zur Verschlüsselung und Entschlüsselung Datenverarbeitungssysteme mit identischem Aufbau zu verwenden. Auch wenn auf die Schlüsselungs-Charakteristik in diesem Fall verzichtet werden kann, kann eine Verwendung der Segmentier-Charakteristik und/oder der Block-Charakteristik gegebenenfalls weiterhin erforderlich sein. Der Grund ist, dass diese Charakteristika aus dem konkreten Aufbau des Datenverarbeitungssystems nicht abgeleitet werden können.

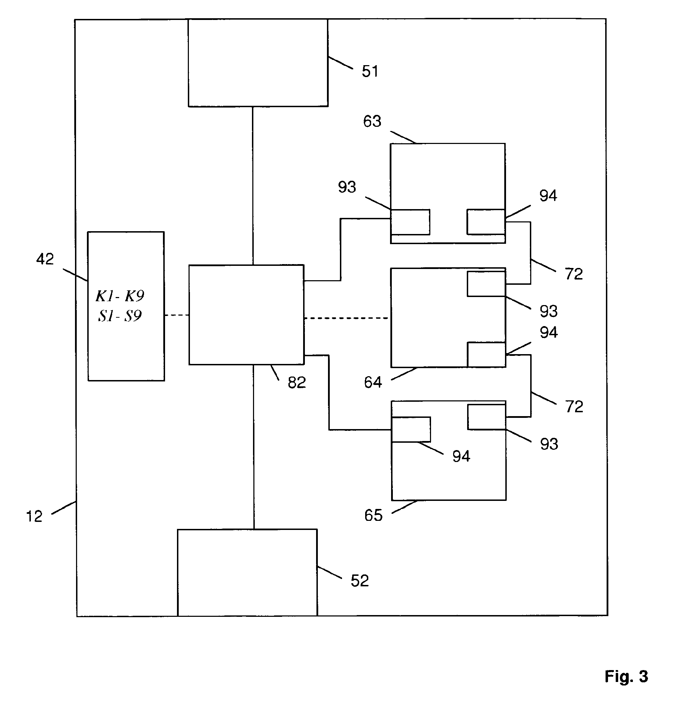

Im Folgenden wird unter Bezugnahme auf Figur 3 der Aufbau eines Datenverarbeitungssystems gemäß einer zweiten bevorzugten Ausführungsform der vorliegenden Erfindung beschrieben. Dabei wird nur auf Aspekte eingegangen, die sich von der ersten Ausführungsform unterscheiden.

Anders als bei der ersten Ausführungsform ist die Speichereinrichtung 42 des Datenverarbeitungssystems 12 der zweiten Ausführungsform ein dauerhaft in das Datenverarbeitungssystem 12 integrierter nichtflüchtiger Speicher in Form eines EEPROM 42. Zusätzlich zu unterschiedlichen Kodierschlüsseln K1-K9 sind in dem EEPROM 42 unterschiedliche Schlüsselungsalgorithmen S1-S9 gespeichert. Dabei sind die Kodierschlüssel K1-K9 nicht einzeln auf dem EEPROM gespeichert, sondern liegen in Form eines Haupt-Kodierschlüssels vor, in dem die Steuereinrichtung 82 unterschiedliche Bereiche definieren kann, die jeweils einem (Teil-)Kodierschlüssel K1-K9 entsprechen. Diese (Teil-)Kodierschlüssel K1-K9 werden bei der Verschlüsselung bzw. Entschlüsselung verwendet. Entsprechend bezeichnet die Schlüsselungs-Charakteristik die bei der Verschlüsselung verwendeten Bereiche des Haupt-Kodierschlüssels, um die Kodierschlüssel anzugeben.

Anders als bei der ersten Ausführungsform weist das Datenverarbeitungssystem 12 drei Datenverarbeiter 63, 64, 65 mit jeweils einer programmierbaren Schaltungslogik zum Verarbeiten empfangener Datenpakete auf. In der Ausführungsform sind die Datenverarbeiter 63, 64, 65 Mikroprozessoren, welche so programmiert und eingerichtet werden können, dass sie die Schlüsselungsalgorithmen S1-S9 implementieren und so ausführen. Anstelle des in der ersten Ausführungsform vorgesehenen Schaltnetzwerks 71 ist ein Verbindungsnetz 72 vorgesehen, welches die Datenverarbeiter 63, 64, 65 seriell mit einer vorgegebenen Reihenfolge verbindet. Dabei sind die Datenverarbeiter 63, 64, 65 so über das Verbindungsnetz 72 verschaltet, dass eine Eingangsschnittstelle 93 eines ersten Datenverarbeiters 63 mit der Steuereinrichtung 82, eine Ausgangsschnittstelle 94 des ersten Datenverarbeiters 63 mit einer Eingangsschnittstelle 93 eines zweiten Datenverarbeiters 64, eine Ausgangsschnittstelle 94 des zweiten Datenverarbeiters 64 mit einer Eingangsschnittstelle 93 eines dritten Datenverarbeiters 65 und eine Ausgangsschnittstelle 94 des dritten Datenverarbeiters 65 mit der Steuereinrichtung 82 verbunden ist.

Folglich legt die Steuereinrichtung 82 in dieser Ausführungsform die Reihenfolge der zu verwendenden Schlüsselungsalgorithmen nicht über die Reihenfolge der Verschaltung der Datenverarbeiter 63, 64, 65, sondern durch entsprechendes Programmieren der Datenverarbeiter 63, 64, 65 fest. Hierfür liest die Steuereinrichtung 82 aus der Speichereinrichtung 42 drei unterschiedliche Schlüsselungsalgorithmen S1, S2, S3 aus und programmiert die Schaltungslogiken der Datenverarbeiter 63, 64, 65 entsprechend (S10). Weiter liest die Steuereinrichtung 82 aus der Speichereinrichtung 42 drei unterschiedliche Kodierschlüssel K1, K2, K3 aus und ordnet jeweils einen Kodierschlüssel K1, K2, K3 einem Datenverarbeiter 63, 64, 65 zu (S13).

Für eine Verarbeitung gibt die Steuereinrichtung ein über eine der Schnittstellen 51, 52 empfangenes Datenpaket eines Datenstroms an die Eingangsschnittstelle 93 des ersten Datenverarbeiters 63 aus. Das Datenpaket wird von den Datenverarbeitern 63, 64, 65 sequentiell so verarbeitet, dass ein von einem vorangegangenen Datenverarbeiter 63 erhaltenes Datenpaket das in dem nachfolgenden Datenverarbeiter 64 zu verarbeitende Datenpaket ist (S16).

Die Verarbeitung der Datenpakete durch die Datenverarbeiter 63, 64 und 65 unterscheidet sich nicht von der Verarbeitung durch die Datenverarbeiter 61, 62 der ersten Ausführungsform.

Wie in der ersten Ausführungsform kann auch die Steuereinrichtung 82 Datenpakete segmentieren bzw. eine Segmentier-Charakteristik verarbeiten und Datenblöcke sowie eine Block-Charakteristik verarbeiten.

Zusätzlich liest die Steuereinrichtung 82 in dieser Ausführungsform für die Zuordnung der Kodierschlüssel K1, K2, K3 zu den Schlüsselungsalgorithmen S1, S2, S3 aus der Speichereinrichtung 42 automatisch eine Schlüsselformatvorschrift der zu verwendenden Schlüsselungsalgorithmen aus (S11), welche einen Aufbau der mit dem jeweiligen Schlüsselungsalgorithmus verwendbaren Kodierschlüssel festlegt.

Diese Schlüsselformatvorschrift wird von der Steuereinrichtung 82 bei der Bestimmung der Teil-Kodierschlüssel K1, K2, K3 aus dem Haupt-Kodierschlüssel (S12) und damit bei der Zuordnung der unterschiedlichen Kodierschlüssel K1, K2, K3 zu den jeweiligen Schlüsselungsalgorithmen S1, S2, S3 (S13) verwendet. In diesem Beispiel gibt die Schlüsselformatvorschrift die für einen jeweiligen Schlüsselungsalgorithmus S1, S2, S3 zulässige maximale Schlüssellänge des jeweiligen Kodierschlüssels K1, K2, K3 an.

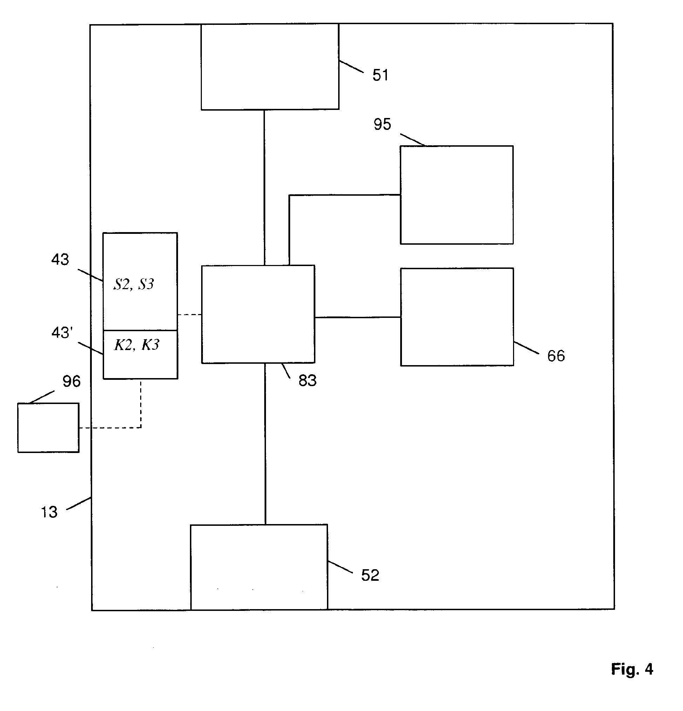

Im Folgenden wird unter Bezugnahme auf Figur 4 der Aufbau eines Datenverarbeitungssystems gemäß einer dritten bevorzugten Ausführungsform der vorliegenden Erfindung beschrieben. Dabei wird nur auf Aspekte eingegangen, die sich von der ersten und/oder zweiten Ausführungsform unterscheiden.

Anders als in den vorangegangenen Ausführungsformen besteht die Speichereinrichtung in dieser Ausführungsform aus einem in das Datenverarbeitungssystem 13 dauerhaft integrierten nichtflüchtigen EEPROM 43, in dem wenigstens zwei unterschiedliche Schlüsselungsalgorithmen S2, S3 und zwei unterschiedliche Kodierschlüssel K2, K3 gespeichert sind, und einem Buffer 43'. In den Buffer 43' werden die Schlüsselungsalgorithmen S2, S3 und die Kodierschlüssel K2, K3 geladen, wenn über ein mit dem Datenverarbeitungssystem 13 verbundenes Eingabeelement (hier eine Tastatur 96) durch einen Benutzer eine Freigabe durch Eingabe einer Geheimnummer wie beispielsweise einer PIN (personal identification number) erfolgt.

Alternativ hierzu ist es jedoch beispielsweise auch möglich, dass die Eingabe der unterschiedlichen Kodierschlüssel direkt durch den Benutzer über das Eingabeelement erfolgt. In diesem Fall brauchen die Kodierschlüssel nicht dauerhaft in dem erfindungsgemäßen Datenverarbeitungssystem gespeichert zu sein.

Weiter ist in dieser Ausführungsform lediglich ein Datenverarbeiter 66 mit einer programmierbaren Schaltungslogik vorgesehen. Wie in den beiden vorangegangenen Ausführungsformen ist der Datenverarbeiter 66 ausgebildet, programmtechnisch so eingerichtet zu werden, dass er ein empfangenes Datenpaket gemäß eines vorgegebenen Schlüsselungsalgorithmus S2, S3 und zugeordneten Kodierschlüssels K2, K3 verarbeitet.

Auch die Arbeitsweise der Steuereinrichtung 83 entspricht im wesentlichen der Arbeitsweise der aus den vorangegangenen Ausführungsformen bekannten Steuereinrichtungen.

Anders als in den vorangegangenen Ausführungsformen bewirkt die Steuereinrichtung 83 eine sequentielle Verarbeitung eines Datenpakets unter Verwendung unterschiedlicher Schlüsselungsalgorithmen und zugeordneter unterschiedlicher Kodierschlüssel (S16, S21) jedoch dadurch, dass sie aus der Speichereinrichtung 43, 43' zunächst einen ersten Schlüsselungsalgorithmus S2 und einen ersten zugeordneten Kodierschlüssel K2, ausliest und die Schaltungslogik des Datenverarbeiter 66 entsprechend programmiert. Anschließend gibt die Steuereinrichtung 83 die zu verarbeitenden Datenpakete an den Datenverarbeiter 66 aus und steuert diesen so, dass er die Datenpakete zunächst unter Verwendung des ersten Schlüsselungsalgorithmus S2 und des ersten zugeordneten Kodierschlüssels K2 verarbeitet. Die verarbeiteten Daten werden von der Steuereinrichtung 83 in einem mit dieser verbundenen Zwischenspeicher 95 zwischengespeichert. Anschließend liest die Steuereinrichtung 83 aus der Speichereinrichtung 43, 43' einen weiteren, zu dem bereits verwendeten Schlüsselungsalgorithmus S2 unterschiedlichen Schlüsselungsalgorithmus S3 und einen weiteren, zu dem bereits verwendeten ersten Kodierschlüssel K2 unterschiedlichen Kodierschlüssel K3 aus und programmiert die Schaltungslogik des Datenverarbeiters 66 entsprechend. Anschließend gibt die Steuereinrichtung 83 die in dem Zwischenspeicher 95 zwischengespeicherten Datenpakete an den Datenverarbeiter 66 aus und steuert diesen so, dass er die Datenpakete unter Verwendung des neuen Schlüsselungsalgorithmus S3 und des neuen zugeordneten Kodierschlüssels K3 verarbeitet. Die verarbeiteten Daten werden von der Steuereinrichtung 83 wieder in dem Zwischenspeicher 95 zwischengespeichert. Diese Vorgehensweise wird von der Steuereinrichtung 83 solange wiederholt, bis die gewünschte Anzahl von Verarbeitungsstufen erreicht ist. Dies kann beispielsweise mittels eines Zählers überwacht werden.

Anders als in den vorangegangenen Ausführungsformen bildet die Steuereinrichtung die Schlüsselungs-Charakteristik (S18) nicht am Ende der Verarbeitung, sondern im Rahmen eines jeden durch den Datenverarbeiter 66 ausgeführten Verarbeitungsschritts. Weiter gibt die Steuereinrichtung 83 die Schlüsselungs-Charakteristik nicht separat am Ende aus (S19), sondern fügt diese dem verarbeiteten Datenpaket unmittelbar in jedem Verarbeitungsschritt hinzu. In diesem Fall muss die Reihenfolge der verwendeten Schlüsselungsalgorithmen und zugeordneten Kodierschlüssel nicht explizit in der Schlüsselungs-Charakteristik angegeben sein. Vielmehr gibt die Schlüsselungs-Charakteristik nur den im jeweiligen Verarbeitungsschritt verwendeten Schlüsselungsalgorithmus und zugeordneten Kodierschlüssel an. Auch die übrigen Charakteristika werden durch die Steuereinrichtung 83 im Rahmen eines jeden Verarbeitungsschritts durch den Datenverarbeiter 66 verarbeitet und den verarbeiteten Datenpaketen hinzugefügt.

Weiter fügt die Steuereinrichtung 83 bei einer Verschlüsselung eines Datenpakets vor jeder Ausgabe des zu verschlüsselnden Datenpakets an den Datenverarbeiter 66 automatisch Zufallsdaten zu dem zu verschlüsselnden Datenpaket hinzu. Die Steuereinrichtung 83 erstellt automatisch eine Zufallsdaten-Charakteristik, welche einen mit Zufallsdaten gefüllten Bereich des die Zufallsdaten aufweisenden zu verschlüsselnden Datenpakets angibt, und fügt sie dem zu verschlüsselnden Datenpaket hinzu. Entsprechend detektiert die Steuereinrichtung 83 bei einer Entschlüsselung eines Datenpakets nach jeder Entschlüsselung automatisch eine dem Datenpaket zugeordnete unverschlüsselte Zufallsdaten-Charakteristik und entfernt die Zufallsdaten automatisch unter Verwendung der detektierten Zufallsdaten-Charakteristik aus dem Datenpaket.

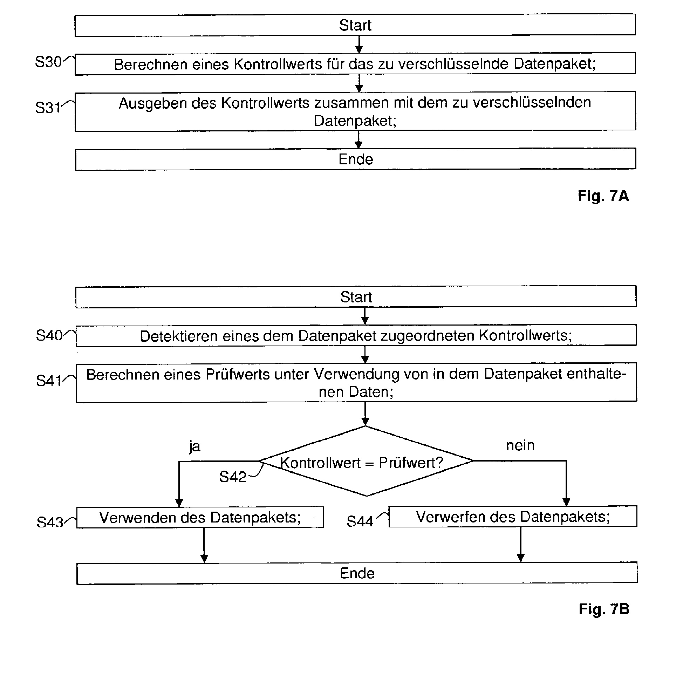

Zudem berechnet die Steuereinrichtung 83 vor jeder Ausgabe des zu verschlüsselnden Datenpakets an den Datenverarbeiter 66 automatisch einen Kontrollwert für das zu verschlüsselnde Datenpaket (S30) und fügt diesen Kontrollwert dem zu verschlüsselnden Datenpaket hinzu (S31). Dies ist in Figur 7A gezeigt. In der vorliegenden Ausführungsform erfolgt dies unter Verwendung eines Hash-Algorithmus.

Entsprechend detektiert die Steuereinrichtung 83 bei einer Entschlüsselung automatisch einen dem Datenpaket zugeordneten Kontrollwert (S40) und berechnet unter Verwendung von in dem Datenpaket enthaltenen Daten einen Prüfwert für das entschlüsselte Datenpaket (S41). Anschließend vergleicht die Steuereinrichtung den Kontrollwert mit dem Prüfwert (S42). Das Datenpaket wird von der Steuereinreichung 83 automatisch als zu verwerfend markiert, wenn der Kontrollwert nicht mit dem Prüfwert übereinstimmt (S44). Anderenfalls wird das Datenpaket weiter verwendet und beispielsweise an den Datenverarbeiter 66 oder über die Schnittstelle 51 an die Kommunikationsschnittstelle 33 ausgegeben (S43). Dies ist in Figur 7B gezeigt.

Auch wenn die Verwendung des Kontrollwertes vorstehend nur in Verbindung mit der dritten Ausführungsform beschrieben wurde, ist die vorliegende Erfindung nicht hierauf beschränkt. Es ist offensichtlich, dass sowohl der Kontrollwert als auch die verschiedenen Charakteristika wie z. B. die Schlüsselungs-Charakteristik, die Segmentier-Charakteristik, die Block-Charakteristik und die Zufallsdaten-Charakteristik gleichzeitig oder wahlweise in allen drei Ausführungsformen verwendet werden können. Weiter kann diese Verwendung des Kontrollwerts bzw. der Charakteristika wahlweise in jedem der aufeinander folgenden Verarbeitungsschritte oder lediglich in einem der aufeinander folgenden Verarbeitungsschritte (wie beispielsweise dem ersten oder letzten Verarbeitungsschritt) erfolgen.

In den vorstehend beschriebenen Ausführungsformen wurden durch die Datenverarbeitungssysteme lediglich Nutzdatenpakete empfangen und verarbeitet. Sollen jedoch Datenpakete verarbeitet werden, die sowohl einen Protokolldatenteil als auch einen Nutzdatenteil aufweisen, ist es vorteilhaft, wenn die jeweilige Steuereinrichtung das verschlüsselte Datenpaket bzw. das entschlüsselte Datenpaket vor der Ausgabe des verschlüsselten Datenpakets als mehrfach verschlüsseltes Datenpaket bzw. des entschlüsselten Datenpakets als mehrfachentschlüsseltes Datenpaket automatisch an ein Format des empfangenen unverschlüsselten Datenpakets bzw. des empfangenen verschlüsselten Datenpakets anpasst. Im einfachsten Fall ist es ausreichend, den Protokolldatenteil an die neue Größe des Nutzdatenteils anzupassen.

In allen drei Ausführungsformen sind die unterschiedlichen Schlüsselungsalgorithmen und Kodierschlüssel voneinander unabhängig. Dies bedeutet, dass zwei oder mehr Schlüsselungsalgorithmen bzw. zwei oder mehr Kodierschlüssel ohne Kenntnis aller Schlüsselungsalgorithmen bzw. Kodierschlüssel nicht gezielt mathematisch auseinander ableitbar sind. Dies schließt nicht aus, dass bei Kenntnis von zwei Kodierschlüsseln bzw. Schlüsselungsalgorithmen nachträglich ein mathematischer Zusammenhang zwischen den jeweiligen Kodierschlüsseln bzw. Schlüsselungsalgorithmen hergestellt werden kann oder sich zufällig ergibt.

Das erfindungsgemäße Verfahren kann gut durch eine Signalfolge und damit ein Computerprogrammprodukt realisiert werden, welche die Ausführung des Verfahrens nach einem der Ansprüche 1 bis 20 veranlasst, wenn sie in einen Mikroprozessor eines Datenverarbeitungssystems geladen ist. Hierdurch wird eine einfach zu konfigurierende und gleichzeitig starke Verschlüsselung bereitgestellt.

Auch wenn vorstehend die Verwendung einer Vielzahl von unterschiedlichen Charakteristika beschrieben wird, ist die vorliegende Erfindung nicht auf diese Charakteristika beschränkt. So kann beispielsweise eine Verschlüsselungs- bzw. Entschlüsselungsstufe in Abhängigkeit von einem jeweils verwendeten Schlüsselungsalgorithmus zusätzlich wenigstens ein Setzen eines Initialisierungsvektors für den jeweiligen Schlüsselungsalgorithmus umfassen.

Zudem ist die Aufteilung der Verarbeitung zwischen der jeweiligen Steuereinrichtung und dem jeweiligen wenigstens einen Datenverarbeiter nicht statisch sondern kann verändert werden.

Auch wenn in allen drei Ausführungsformen die Steuereinrichtung, der wenigstens eine Datenverarbeiter, die Schnittstellen, die Speichereinrichtung und das Schaltnetzwerk bzw. Verbindungsnetz als separate Elemente beschrieben werden, können mehrere oder sogar alle Elemente auch in einen gemeinsamen Halbleiterbaustein wie beispielsweise einen Mikroprozessor integriert sein.

Das erfindungsgemäße Datenverarbeitungssystem kann auch insgesamt in ein übergeordnetes System, wie beispielsweise ein Personalcomputer, ein digitales Telephon oder Fax, ein Modem, eine Netzwerkkarte oder ähnliches integriert sein. In diesem Fall kann es vorteilhaft sein, wenn das erfindungsgemäße Datenverarbeitungssystem unabhängig von einem Betriebssystem des übergeordneten Systems arbeitet. Hierdurch ist die Betriebsfähigkeit des erfindungsgemäßen Datenverarbeitungssystems unabhängig von dem übergeordneten System sichergestellt.

Alternativ zu einer dauerhaften Speicherung von unterschiedlichen Kodierschlüsseln und/oder unterschiedlichen Schlüsselungsalgorithmen in einer Speichereinrichtung kann auch vorgesehen sein, dass die in der Speichereinrichtung gespeicherten unterschiedlichen Kodierschlüssel und/oder unterschiedlichen Schlüsselungsalgorithmen im Rahmen einer Wartung, die auch eine Fernwartung sein kann, ersetzt werden können. Dies kann beispielsweise auch dadurch erfolgen, dass die Schlüsselungsalgorithmen und/oder Kodierschlüssel auf einem wechselbaren Speichermedium gespeichert sind. Dann kann ein Ersetzen der Schlüsselungsalgorithmen und/oder Kodierschlüssel einfach durch Wechseln des Speichermediums erfolgen. Hierdurch kann das erfindungsgemäße Datenverarbeitungssystem leicht angepasst werden, wenn beispielsweise die Sicherheit eines Kodierschlüssels oder Schlüsselungsalgorithmus überwunden wurde. Selbstverständlich kann dabei eine beliebige Anzahl (größer gleich 2) von unterschiedlichen Kodierschlüsseln und eine beliebige Anzahl (größer gleich 2) von unterschiedlichen Schlüsselungsalgorithmen vorgesehen sein.

Weiter wird betont, dass das Datenverarbeitungssystem zusätzliche (nicht dargestellte) Speicher und Hilfselemente wie beispielsweise eine Stromversorgung aufweisen kann, um die Funktionsfähigkeit des erfindungsgemäßen Datenverarbeitungssystems zu unterstützen.

Weiter werden die vorstehenden Ausführungsformen unter Verwendung von symmetrischen Kodierschlüsseln und Schlüsselungsalgorithmen beschrieben. Dies hat auch eine Symmetrie der verschiedenen Charakteristika und insbesondere der Schlüsselungs-Charakteristik zur Folge. Die vorliegende Erfindung ist hierauf jedoch nicht beschränkt. Vielmehr können auch asymmetrische Kodierschlüssel und Schlüsselungsalgorithmen verwendet werden. In der Folge muss zwischen Verschlüsselungs-Kodierschlüsseln und Entschlüsselungs-Kodierschlüsseln sowie Verschlüsselungsalgorithmen und Entschlüsselungsalgorithmen unterschieden werden. Es ist für den Fachmann offensichtlich, dass die verschiedenen Charakteristika an die Asymmetrie entsprechend anzupassen sind. Da der Fachmann dabei nicht prinzipiell von der vorstehend beschriebenen erfindungsgemäßen Lösung abweichen, sondern diese nur anpassen muss, wird auf eine gesonderte Beschreibung verzichtet.

Zusammenfassend betrifft die vorliegende Erfindung somit ein Verfahren zur Verschlüsselung von Datenpaketen eines Datenstroms und zum Entschlüsseln von mehrfach verschlüsselten Daten eines Datenstroms, welches eine erhöhte Sicherheit der Verschlüsselung bereitstellt und mittels einer Signalfolge (eines Computerprogrammproduktes) oder einer Datenverarbeitungsvorrichtung automatisiert werden kann. Dabei wird ein zu verschlüsselndes Datenpaket bzw. ein zu entschlüsselndes Datenpaket automatisch sequentiell in wenigstens zwei aufeinander folgenden Verarbeitungsstufen unter Verwendung unterschiedlicher Schlüsselungsalgorithmen und unterschiedlicher zugeordneter Kodierschlüssel verschlüsselt bzw. entschlüsselt. Hierdurch ergibt sich eine von der Reihenfolge der Verarbeitungsstufen abhängige Verschlüsselung bzw. Entschlüsselung mit erhöhter Datensicherheit.

Dabei ist das Verfahren von außen vorzugsweise opak. Folglich ist der Ablauf im Inneren eines erfindungsgemäßen Datenverarbeitungssystems vorzugsweise von außen nicht detektierbar. Vielmehr stellt das Datenverarbeitungssystem vorzugsweise eine "blackbox" dar, die zu verarbeitende Daten und ggf. Kodierschlüssel und/oder Schlüsselungsalgorithmen und ggf. Zusatzdaten (Charakteristika) erhält und verarbeitete Daten sowie ggf. Zusatzdaten (Charakteristika) ausgibt.

Dabei unterscheiden sich die Schnittstellen des erfindungsgemäßen Datenverarbeitungssystems vorzugsweise nicht von denen herkömmlicher Verschlüsseler / Entschlüsseler, welche den gleichen Schlüsselungsalgorithmus verwenden, wie er in der ersten Verarbeitungsstufe des Datenverarbeitungssystems verwendet wird. Dies erleichtert eine modulare Verwendung des erfindungsgemäßen Datenverarbeitungssystems. Von außen betrachtet wirken die wenigstens zwei aufeinander folgenden Verarbeitungsstufen wie ein neuer Verschlüsselungsalgorithmus mit erhöhter Leistungsfähigkeit. Entsprechend kann die Schlüsselungs-Charakteristik den Namen des neuen Verschlüsselungsalgorithmus angeben.

Die erzielte hohe Datensicherheit macht den erfindungsgemäßen Datenverarbeiter und das erfindungsgemäße Verfahren ebenso wie die erfindungsgemäße Signalfolge für einen Einsatz im Rahmen einer mobilen / externen Kommunikation mit sensiblen Übertragungsnetzwerken wie beispielsweise den Übertragungsnetzwerken von Banken oder Behörden besonders geeignet.

Aufgrund der sequentiellen Verwendung von wenigstens zwei unterschiedlichen Schlüsselungsalgorithmen und unterschiedlichen zugeordneten Kodierschlüsseln stellt die erfindungsgemäße Lösung auch dann noch eine ausreichende Datensicherheit bereit, wenn einer der wenigstens zwei verwendeten Schlüsselungsalgorithmen und/oder Kodierschlüssel angreifbar geworden ist. Folglich ist die Gefahr einer Veralterung bei einer Hardwareimplementierung erheblich reduziert.

Es wird betont, dass die vorliegende Erfindung nicht auf die vorstehend beschriebenen Ausführungsformen beschränkt ist, sondern zahlreiche Variationen möglich sind, ohne dass von der beanspruchten Lösung abgewichen werden muss.

Zusammengefasst stellt die Erfindung also ein Verfahren zur Verschlüsselung von Datenpaketen eines Datenstroms, ein korrespondierendes Verfahren zur Entschlüsselung von mehrfach verschlüsselten Paketen eines Datenstroms, eine Signalfolge, welche die Ausführung dieser Verfahren veranlasst, sowie ein Datenverarbeitungssystem zur korrespondierenden Verarbeitung von Datenpaketen bereit.

Hierbei läßt sich das Verfahren zur Verschlüsselung von Datenpaketen wie folgt beschreiben:
1. Verfahren zur Verschlüsselung von Datenpaketen eines Datenstroms, bei dem ein zu verschlüsselndes Datenpaket automatisch sequentiell in wenigstens zwei aufeinander folgenden Verschlüsselungsstufen verschlüsselt wird, aufweisend die folgenden Schritte:
   - Bestimmen von Anzahl, Art und Reihenfolge von in den aufeinander folgenden Verschlüsselungsstufen zu verwendenden unterschiedlichen Schlüsselungsalgorithmen;
   - Bestimmen von in den aufeinander folgenden Verschlüsselungsstufen zu verwendenden unterschiedlichen Kodierschlüsseln;
   - Zuordnen jeweils eines Kodierschlüssels zu jeweils einem Schlüsselungsalgorithmus in jeweils einer Verschlüsselungsstufe; und
   - Sequentielles Verschlüsseln eines zu verschlüsselnden Datenpakets in wenigstens zwei aufeinander folgenden Verschlüsselungsstufen, um ein mehrfach verschlüsseltes Datenpaket zu erhalten.
2. Verfahren nach Punkt 1, weiter umfassend folgende Schritte:
   - Erstellen einer unverschlüsselten Schlüsselungs-Charakteristik zu dem mehrfach verschlüsselten Datenpaket, welche Schlüsselungs-Charakteristik wenigstens den zeitlich zuletzt verwendeten Schlüsselungsalgorithmus und den zugeordneten Kodierschlüssel angibt; und
   - Ausgeben der Schlüsselungs-Charakteristik zusammen mit dem mehrfach verschlüsselten Datenpaket.
3. Verfahren nach Punkt 2, weiter umfassend
   - Hinzufügen der erzeugten unverschlüsselten Schlüsselungs-Charakteristik in jeder Verschlüsselungsstufe nach dem Verschlüsseln zu dem jeweiligen verschlüsselten Datenpaket.
4. Verfahren nach einem der vorangegangenen Punkte,
   wobei jede Verschlüsselungsstufe umfasst:
   - Ermitteln wenigstens einer Formatvorschrift des in der jeweiligen Verschlüsselungsstufe verwendeten Schlüsselungsalgorithmus, wobei die wenigstens eine Formatvorschrift einen Aufbau der mit dem jeweiligen Schlüsselungsalgorithmus verschlüsselbaren Datenpakete festlegt; und
   - Anpassen des Aufbaus des zu verschlüsselnden Datenpakets an den jeweiligen Schlüsselungsalgorithmus unter Verwendung der wenigstens einen Formatvorschrift.
5. Verfahren nach Punkt 4, wobei das Anpassen des zu verschlüsselnden Datenpakets umfasst:
   - Segmentieren des zu verschlüsselnden Datenpakets in mehrere zu verschlüsselnde Teildatenpakete;
   - Verwenden der Teildatenpakete anstelle des zu verschlüsselnden Datenpakets;
   - Erstellen einer unverschlüsselten Segmentier-Charakteristik zu den zu verschlüsselnden Teildatenpaketen, wobei die Segmentier-Charakteristik Teildatenpakete bezeichnet, die durch Segmentieren eines einzelnen Datenpakets gewonnen wurden; und
   - Ausgeben der Segmentier-Charakteristik zusammen mit den segmentierten zu verschlüsselnden Teildatenpaketen.
6. Verfahren nach einem der Punkte 4 oder 5, wobei das Anpassen des zu verschlüsselnden Datenpakets umfasst:
   - Erstellen eines Datenblocks, welcher Datenblock das zu verschlüsselnde Datenpaket und eine Block-Charakteristik enthält, wobei die Block-Charakteristik das zu verschlüsselnde Datenpaket in dem Datenblock kennzeichnet; und
   - Verwenden des Datenblocks anstelle des zu verschlüsselnden Datenpakets.
7. Verfahren nach einem der vorangegangenen Punkte, weiter umfassend:
   - Aufteilen eines Haupt-Kodierschlüssels in mehrere unterschiedliche Teil-Kodierschlüssel; und
   - Zuordnen jeweils eines Teil-Kodierschlüssels zu jeweils einem Schlüsselungsalgorithmus in jeweils einer Verschlüsselungsstufe.
8. Verfahren nach einem der vorangegangenen Punkte, wobei das Bestimmen der in den aufeinander folgenden Verschlüsselungsstufen zu verwendenden unterschiedlichen Kodierschlüssel umfasst:
   - Ermitteln wenigstens einer Schlüsselformatvorschrift des in der jeweiligen Verschlüsselungsstufe zu verwendenden Schlüsselungsalgorithmus, wobei die wenigstens eine Schlüsselformatvorschrift einen Aufbau der mit dem jeweiligen Schlüsselungsalgorithmus verwendbaren Kodierschlüssel festlegt; und
   - Berücksichtigen der Schlüsselformatvorschrift bei der Bestimmung des in der jeweiligen Verschlüsselungsstufe zu verwendenden Kodierschlüssels.
9. Verfahren nach einem der vorangegangenen Punkte, wobei wenigstens eine Verschlüsselungsstufe die folgenden Schritte umfasst:
   - Hinzufügen von Zufallsdaten zu dem zu verschlüsselnden Datenpaket vor dem Verschlüsseln;
   - Verwenden des die Zufallsdaten aufweisenden Datenpakets anstelle des zu verschlüsselnden Datenpakets;
   - Erstellen einer Zufallsdaten-Charakteristik zu dem die Zufallsdaten aufweisenden zu verschlüsselnden Datenpaket, wobei die Zufallsdaten-Charakteristik einen mit Zufallsdaten gefüllten Bereich des die Zufallsdaten aufweisenden zu verschlüsselnden Datenpakets angibt; und
   - Ausgeben der Zufallsdaten-Charakteristik zusammen mit dem die Zufallsdaten aufweisenden zu verschlüsselnden Datenpaket.
10. Verfahren nach einem der vorangegangenen Punkte, wobei wenigstens eine Verschlüsselungsstufe vor der Verschlüsselung ferner die Schritte umfasst:
   - Berechnen eines Kontrollwerts für das zu verschlüsselnde Datenpaket; und
   - Ausgeben des Kontrollwerts zusammen mit dem zu verschlüsselnden Datenpaket.
   Das Verfahren zur Entschlüsselung von mehrfach verschlüsselten Datenpaketen läßt sich wie folgt beschreiben:
11. Verfahren zur Entschlüsselung von mehrfach verschlüsselten Datenpaketen eines Datenstroms, aufweisend die folgenden Schritte:
   - Detektieren wenigstens einer dem mehrfach verschlüsselten Datenpaket zugeordneten unverschlüsselten Schlüsselungs-Charakteristik, welche Schlüsselungs-Charakteristik wenigstens einen Schlüsselungsalgorithmus und einen zugeordneten Kodierschlüssel angibt; und
   - Sequentielles Entschlüsseln des zu entschlüsselnden Datenpakets in wenigstens zwei aufeinander folgenden Entschlüsselungsstufen unter Verwendung des in der wenigstens einen Schlüsselungs-Charakteristik angegebenen wenigstens einen Schlüsselungsalgorithmus und zugeordneten Kodierschlüssels.
12. Verfahren nach Punkt 11, wobei wenigstens eine Entschlüsselungsstufe die folgenden Schritte umfasst:
   - Detektieren einer dem Datenpaket zugeordneten unverschlüsselten Segmentier-Charakteristik, wobei die Segmentier-Charakteristik Datenpakete bezeichnet, die Segmente eines einzelnen Gesamtdatenpakets sind;
   - Bilden des Gesamtdatenpakets anhand der entschlüsselten Datenpakete und der Segmentier-Charakteristik nach dem Entschlüsseln; und
   - Verwenden des Gesamtdatenpakets anstelle des Datenpakets.
13. Verfahren nach einem der Punkte 11 oder 12, wobei wenigstens eine Entschlüsselungsstufe umfasst:
   - Detektieren einer unverschlüsselten Block-Charakteristik in dem Datenpaket nach dem Entschlüsseln, wobei die Block-Charakteristik in dem Datenpaket ein im weiteren Verfahren zu verwendendes Datenpaket kennzeichnet.
14. Verfahren nach einem der Punkte 11 bis 13, weiter aufweisend:
   - Aufteilen eines Haupt-Kodierschlüssels in mehrere unterschiedliche Teil-Kodierschlüssel in Abhängigkeit von der jeweiligen Schlüsselungs-Charakteristik; und
   - Zuordnen jeweils eines Teil-Kodierschlüssels zu jeweils einem Schlüsselungsalgorithmus in jeweils einer Entschlüsselungsstufe in Abhängigkeit von der jeweiligen Schlüsselungs-Charakteristik.
15. Verfahren nach einem der Punkte 11 bis 14, wobei wenigstens eine Entschlüsselungsstufe die folgenden Schritte umfasst:
   - Detektieren einer dem Datenpaket zugeordneten unverschlüsselten Zufallsdaten-Charakteristik, wobei die Zufallsdaten-Charakteristik einen mit Zufallsdaten gefüllten Bereich des Datenpakets angibt; und
   - Entfernen der Zufallsdaten aus dem Datenpaket nach dem Entschlüsseln unter Verwendung der detektierten Zufallsdaten-Charakteristik.
16. Verfahren nach einem der Punkte 11 bis 15, wobei wenigstens eine Entschlüsselungsstufe nach dem Entschlüsseln die folgenden Schritte umfasst:
   - Detektieren eines dem Datenpaket zugeordneten Kontrollwerts;
   - Berechnen eines Prüfwerts unter Verwendung von in dem Datenpaket enthaltenen Daten;
   - Vergleichen des Kontrollwerts mit dem Prüfwert; und
   - Verwerfen des Datenpakets, wenn der Kontrollwert nicht mit dem Prüfwert übereinstimmt.
17. Verfahren nach einem der Punkte 2 bis 16, wobei die Schlüsselungs-Charakteristik die Reihenfolge aller im Rahmen der sequentiellen Verschlüsselung bzw. Entschlüsselung in den unterschiedlichen Verschlüsselungsstufen bzw. Entschlüsselungsstufen verwendeten Schlüsselungsalgorithmen mit den jeweils zugehörigen Kodierschlüsseln angibt.
18. Verfahren nach einem der Punkte 2 bis 17, wobei die Ausgabe von Schlüsselungs-Charakteristik, Segmentier-Charakteristik und Zufallsdaten-Charakteristik für ein zu verschlüsselndes Datenpaket gemeinsam als Sammel-Charakteristik erfolgt.
19. Verfahren nach einem der vorangegangenen Punkte, wobei ein im Rahmen einer vorangegangenen Verschlüsselungsstufe der sequentiellen Verschlüsselung erhaltenes verschlüsseltes Datenpaket das in einer nachfolgenden Verschlüsselungsstufe der sequentiellen Verschlüsselung zu verschlüsselnde Datenpaket ist und / oder ein im Rahmen einer vorangegangenen Entschlüsselungsstufe der sequentiellen Entschlüsselung erhaltenes Datenpaket das in einer nachfolgenden Entschlüsselungsstufe der sequentiellen Entschlüsselung zu entschlüsselnde Datenpaket ist.
20. Verfahren nach einem der vorangegangenen Punkte, wobei die unterschiedlichen Schlüsselungsalgorithmen und/oder Kodierschlüssel voneinander unabhängig sind.
   Die Signalfolge lässt sich wie folgt charakterisieren:
21. Signalfolge, welche die Ausführung des Verfahrens nach einem der Punkte 1 bis 20 veranlasst, wenn sie in einen Datenverarbeiter, insbesondere einen Mikroprozessor, eines Datenverarbeitungssystem geladen ist.
   Das Datenverarbeitungssystem lässt sich ferner durch die folgenden Punkte beschreiben:
22. Datenverarbeitungssystem, wobei das Datenverarbeitungssystem wenigstens Datenpakete eines Datenstroms empfängt und die empfangenen Datenpakete gemäß einer vorgegebenen Vorschrift verarbeitet, dadurch gekennzeichnet, dass das Datenverarbeitungssystem dazu programmiert und eingerichtet ist, das Verfahren nach einem der Punkte 1 bis 20 auszuführen.
23. Datenverarbeitungssystem nach Punkt 22, umfassend eine Speichereinrichtung, in welcher wenigstens zwei unterschiedliche Kodierschlüssel gespeichert sind; wenigstens zwei Datenverarbeiter, die jeweils eine festkodierte Schaltungslogik aufweisen, welche Schaltungslogik jeweils unterschiedliche Schlüsselungsalgorithmen zur Verarbeitung eines empfangenen Datenpakets unter Verwendung eines Kodierschlüssels implementiert; ein Schaltnetzwerk, um die Datenverarbeiter wahlweise seriell zu verbinden, wobei die Reihenfolge änderbar ist; und eine Steuereinrichtung, welche das Schaltnetzwerk und die wenigstens zwei Datenverarbeiter steuert, wenigstens die Datenpakete des Datenstroms empfängt und an einen ersten der wenigstens zwei Datenverarbeiter ausgibt, aus der Speichereinrichtung unterschiedliche Kodierschlüssel ausliest und an die Datenverarbeiter ausgibt.
24. Datenverarbeitungssystem nach Punkt 23, wobei jeder Datenverarbeiter einen Buffer zum Zwischenspeichern von verarbeiteten Datenpaketen aufweist, wobei die Größe des Buffers von einem jeweiligen Anwendungsfall des erfindungsgemäßen Datenverarbeitungssystems abhängt.
25. Datenverarbeitungssystem nach Punkt 22, umfassend eine Speichereinrichtung, in welcher wenigstens zwei unterschiedliche Kodierschlüssel und wenigstens zwei unterschiedliche Schlüsselungsalgorithmen gespeichert sind; wenigstens zwei Datenverarbeiter, die jeweils eine programmierbare Schaltungslogik zum Verarbeiten empfangener Datenpakete aufweisen; ein Verbindungsnetz, welches die Datenverarbeiter seriell mit einer vorgegebenen Reihenfolge verbindet; und eine Steuereinrichtung, welche die wenigstens zwei Datenverarbeiter steuert, aus der Speichereinrichtung unterschiedliche Schlüsselungsalgorithmen ausliest und die Schaltungslogiken der Datenverarbeiter entsprechend programmiert, wenigstens die Datenpakete des Datenstroms empfängt und an einen ersten der wenigstens zwei Datenverarbeiter ausgibt, und aus der Speichereinrichtung unterschiedliche Kodierschlüssel ausliest und an die Datenverarbeiter ausgibt, wobei die gemäß eines jeweiligen Schlüsselungsalgorithmus programmierten Schaltungslogiken der jeweiligen Datenverarbeiter die jeweils empfangenen Datenpakete unter Verwendung des jeweiligen empfangenen Kodierschlüssels verarbeiten.
26. Datenverarbeitungssystem nach einem der Punkte 23 bis 25, wobei jeder Datenverarbeiter ferner wenigstens eine Eingangs-Schnittstelle zum Empfangen von zu verarbeitenden Datenpaketen und eine Ausgangs-Schnittstelle zum Ausgeben von verarbeiteten Datenpaketen aufweist, und wobei wenigstens die Ausgangs-Schnittstelle des ersten Datenverarbeiters über das Schaltnetzwerk bzw. das Verbindungsnetz mit der Eingangs-Schnittstelle eines zweiten Datenverarbeiters verbunden ist.
27. Datenverarbeitungssystem nach Punkt 22, umfassend eine Speichereinrichtung, in welcher wenigstens zwei unterschiedliche Kodierschlüssel und wenigstens zwei unterschiedliche Schlüsselungsalgorithmen gespeichert sind; einen Datenverarbeiter mit einer programmierbaren Schaltungslogik zum Verarbeiten empfangener Datenpakete; und eine Steuereinrichtung, welche wenigstens die Datenpakete des Datenstroms empfängt, aus der Speichereinrichtung zeitlich nacheinander unterschiedliche Schlüsselungsalgorithmen ausliest und die Schaltungslogik des Datenverarbeiter entsprechend programmiert sowie aus der Speichereinrichtung zeitlich nacheinander unterschiedliche Kodierschlüssel ausliest und zusammen mit zu verarbeitenden Daten an den Datenverarbeiter ausgibt, wobei die Steuereinrichtung weiter von dem Datenverarbeiter unter Verwendung des jeweiligen Kodierschlüssels und Schlüsselalgorithmus verarbeitete Daten erhält, und wobei die Steuereinrichtung weiter die von dem Datenverarbeiter empfangenen verarbeiteten Daten wenigstens einmal an den Datenverarbeiter ausgibt und diesen so steuert, dass der Datenverarbeiter ein von der Steuerungseinrichtung empfangenes zu verarbeitendes Datenpaket wenigstens zweimal zeitlich hintereinander unter Verwendung unterschiedlicher Schlüsselungsalgorithmen und unterschiedlicher Kodierschlüssel verarbeitet.
28. Datenverarbeitungssystem nach einem der Punkte 22 bis 27, wobei die Steuereinrichtung beim Empfang eines zu verschlüsselnden Datenpakets automatisch eine Anzahl, Art und Reihenfolge von in aufeinander folgenden Verschlüsselungsstufen zu verwendende unterschiedliche Schlüsselungsalgorithmen bestimmt, in den aufeinander folgenden Verschlüsselungsstufen zu verwendende unterschiedliche Kodierschlüssel bestimmt und jeweils einen Kodierschlüssel zu jeweils einem Schlüsselungsalgorithmus in jeweils einer Verschlüsselungsstufe zuordnet, wobei die Steuereinrichtung weiter den wenigstens einen Datenverarbeiter entsprechend steuert, um ein mehrfach verschlüsseltes Datenpaket zu erhalten, und wobei die Steuereinrichtung weiter automatisch eine unverschlüsselte Schlüsselungs-Charakteristik erstellt, welche Schlüsselungs-Charakteristik wenigstens den zeitlich zuletzt verwendeten Schlüsselungsalgorithmus und den zugeordneten Kodierschlüssel angibt, und die Schlüsselungs-Charakteristik zusammen mit dem mehrfach verschlüsselten Datenpaket ausgibt.
29. Datenverarbeitungssystem nach Punkt 28, wobei die Steuereinrichtung weiter automatisch wenigstens eine Formatvorschrift des in der jeweiligen Verschlüsselungsstufe verwendeten Schlüsselungsalgorithmus ermittelt, wobei die wenigstens eine Formatvorschrift einen Aufbau der mit dem jeweiligen Schlüsselungsalgorithmus verschlüsselbaren Datenpakete festlegt und den Aufbau des zu verschlüsselnden Datenpakets vor der Ausgabe an den jeweiligen Datenverarbeiter unter Verwendung der wenigstens einen Formatvorschrift an den jeweiligen Schlüsselungsalgorithmus anpasst.
30. Datenverarbeitungssystem nach Punkt 28 oder 29, wobei die Steuereinrichtung weiter automatisch aus der Speichereinrichtung einen Haupt-Kodierschlüssel ausliest und diesen in mehrere unterschiedliche Teil-Kodierschlüssel unterteilt, und jeweils einen Teil-Kodierschlüssel zu jeweils einem Schlüsselungsalgorithmus in jeweils einer Verschlüsselungsstufe zuordnet.
31. Datenverarbeitungssystem nach Punkt 28, 29 oder 30, wobei die Steuereinrichtung weiter automatisch aus der Speichereinrichtung eine Schlüsselformatvorschrift des in der jeweiligen Verschlüsselungsstufe zu verwendenden Schlüsselungsalgorithmus ausliest, wobei die wenigstens eine Schlüsselformatvorschrift einen Aufbau der mit dem jeweiligen Schlüsselungsalgorithmus verwendbaren Kodierschlüssel festlegt und die Schlüsselformatvorschrift bei der Bestimmung des in der jeweiligen Verschlüsselungsstufe zu verwendenden Kodierschlüssels berücksichtigt.
32. Datenverarbeitungssystem einem der Punkte 28 bis 31, wobei die Steuereinrichtung weiter automatisch vor einer Ausgabe des zu verschlüsselnden Datenpakets an den jeweiligen Datenverarbeiter Zufallsdaten zu dem zu verschlüsselnden Datenpaket hinzufügt, und eine Zufallsdaten-Charakteristik zu dem die Zufallsdaten aufweisenden zu verschlüsselnden Datenpaket erstellt, wobei die Zufallsdaten-Charakteristik einen mit Zufallsdaten gefüllten Bereich des die Zufallsdaten aufweisenden zu verschlüsselnden Datenpakets angibt.
33. Datenverarbeitungssystem einem der Punkte 28 bis 32, wobei die Steuereinrichtung weiter automatisch vor einer Ausgabe des zu verschlüsselnden Datenpakets an den jeweiligen Datenverarbeiter einen Kontrollwert für das zu verschlüsselnde Datenpaket berechnet.
34. Datenverarbeitungssystem nach einem der Punkte 22 bis 27, wobei die Steuereinrichtung beim Empfang von zu entschlüsselnden mehrfach verschlüsselten Datenpaketen automatisch wenigstens eine dem Datenpaket zugeordnete unverschlüsselte Schlüsselungs-Charakteristik detektiert, welche Schlüsselungs-Charakteristik wenigstens einen Schlüsselungsalgorithmus und einen zugeordneten Kodierschlüssel angibt und den wenigstens einen Datenverarbeiter so steuert, dass dieser das zu entschlüsselnde Datenpaket sequentiell in wenigstens zwei aufeinander folgenden Entschlüsselungsstufen unter Verwendung des in der wenigstens einen Schlüsselungs-Charakteristik angegebenen wenigstens einen Schlüsselungsalgorithmus und zugeordneten Kodierschlüssels entschlüsselt.
35. Datenverarbeitungssystem nach Punkt 34, wobei die Steuereinrichtung weiter automatisch eine dem Datenpaket zugeordnete unverschlüsselte Segmentier-Charakteristik detektiert, wobei die Segmentier-Charakteristik Datenpakete bezeichnet, die Segmente eines einzelnen Gesamtdatenpakets sind, und anhand der entschlüsselten Datenpakete und der Segmentier-Charakteristik nach dem Entschlüsseln ein Gesamtdatenpaket bildet.
36. Datenverarbeitungssystem nach Punkt 34 oder 35, wobei die Steuereinrichtung weiter automatisch nach dem Entschlüsseln eine unverschlüsselte Block-Charakteristik in dem Datenpaket detektiert, wobei die Block-Charakteristik ein in dem Datenpaket enthaltenes Nutzdatenpaket kennzeichnet.
37. Datenverarbeitungssystem nach Punkt 34, 35 oder 36, wobei die Steuereinrichtung weiter automatisch aus der Speichereinrichtung einen Haupt-Kodierschlüssel ausliest und diesen in Abhängigkeit von der jeweiligen Schlüsselungs-Charakteristik in mehrere unterschiedliche Teil-Kodierschlüssel unterteilt, und jeweils einen Teil-Kodierschlüssel in Abhängigkeit von der jeweiligen Schlüsselungs-Charakteristik zu jeweils einem Schlüsselungsalgorithmus in jeweils einer Entschlüsselungsstufe zuordnet.
38. Datenverarbeitungssystem nach einem der Punkte 34 bis 37, wobei die Steuereinrichtung weiter automatisch eine dem Datenpaket zugeordnete unverschlüsselte Zufallsdaten-Charakteristik detektiert, wobei die Zufallsdaten-Charakteristik einen mit Zufallsdaten gefüllten Bereich des Datenpakets angibt, und die Zufallsdaten nach dem Entschlüsseln aus dem Datenpaket unter Verwendung der detektierten Zufallsdaten-Charakteristik entfernt.
39. Datenverarbeitungssystem nach einem der Punkte 34 bis 38, wobei die Steuereinrichtung weiter automatisch einen dem Datenpaket zugeordneten Kontrollwert detektiert, unter Verwendung von in dem Datenpaket enthaltenen Daten einen Prüfwert berechnet, den Kontrollwert mit dem Prüfwert vergleicht und das Datenpaket verwirft, wenn der Kontrollwert nicht mit dem Prüfwert übereinstimmt.
40. Datenverarbeitungssystem nach einem der Punkte 34 bis 39, wobei die Steuereinrichtung vor der Ausgabe des verschlüsselten Datenpakets als mehrfach verschlüsseltes Datenpaket bzw. des entschlüsselten Datenpakets als mehrfachentschlüsseltes Datenpaket weiter automatisch das verschlüsselte Datenpaket bzw. das entschlüsselte Datenpaket an ein Format des empfangenen unverschlüsselten Datenpakets bzw. des empfangenen verschlüsselten Datenpakets anpasst.

## Patentansprüche

1. Verfahren zur Verschlüsselung von Datenpaketen eines Datenstroms, bei dem ein zu verschlüsselndes Datenpaket automatisch sequentiell in wenigstens zwei aufeinander folgenden Verschlüsselungsstufen verschlüsselt wird, aufweisend die folgenden Schritte:
- (S10) Bestimmen von Anzahl, Art und Reihenfolge von in den aufeinander folgenden Verschlüsselungsstufen zu verwendenden unterschiedlichen Schlüsselungsalgorithmen;
- (S12) Bestimmen von in den aufeinander folgenden Verschlüsselungsstufen zu verwendenden unterschiedlichen Kodierschlüsseln;
- (S13) Zuordnen jeweils eines Kodierschlüssels zu jeweils einem Schlüsselungsalgorithmus in jeweils einer Verschlüsselungsstufe;
- (S16, S17) Sequentielles Verschlüsseln eines zu verschlüsselnden Datenpakets in wenigstens zwei aufeinander folgenden Verschlüsselungsstufen, um ein mehrfach verschlüsseltes Datenpaket zu erhalten;
- (S18) Erstellen einer unverschlüsselten Schlüsselungs-Charakteristik zu dem mehrfach verschlüsselten Datenpaket, welche Schlüsselungs-Charakteristik wenigstens den zeitlich zuletzt verwendeten Schlüsselungsalgorithmus und den zugeordneten Kodierschlüssel angibt; und
- (S19) Ausgeben der Schlüsselungs-Charakteristik zusammen mit dem mehrfach verschlüsselten Datenpaket.

2. Verfahren nach Anspruch 1, weiter umfassend
- Hinzufügen der erzeugten unverschlüsselten Schlüsselungs-Charakteristik in jeder Verschlüsselungsstufe nach dem Verschlüsseln zu dem jeweiligen verschlüsselten Datenpaket.

3. Verfahren nach einem der vorangegangenen Ansprüche,
wobei jede Verschlüsselungsstufe umfasst:
- (S14) Ermitteln wenigstens einer Formatvorschrift des in der jeweiligen Verschlüsselungsstufe verwendeten Schlüsselungsalgorithmus, wobei die wenigstens eine Formatvorschrift einen Aufbau der mit dem jeweiligen Schlüsselungsalgorithmus verschlüsselbaren Datenpakete festlegt; und
- (S15) Anpassen des Aufbaus des zu verschlüsselnden Datenpakets an den jeweiligen Schlüsselungsalgorithmus unter Verwendung der wenigstens einen Formatvorschrift.

4. Verfahren nach Anspruch 3,
wobei das Anpassen des zu verschlüsselnden Datenpakets umfasst:
- Segmentieren des zu verschlüsselnden Datenpakets in mehrere zu verschlüsselnde Teildatenpakete;
- Verwenden der Teildatenpakete anstelle des zu verschlüsselnden Datenpakets;
- Erstellen einer unverschlüsselten Segmentier-Charakteristik zu den zu verschlüsselnden Teildatenpaketen, wobei die Segmentier-Charakteristik Teildatenpakete bezeichnet, die durch Segmentieren eines einzelnen Datenpakets gewonnen wurden; und
- Ausgeben der Segmentier-Charakteristik zusammen mit den segmentierten zu verschlüsselnden Teildatenpaketen.

5. Verfahren nach einem der Ansprüche 3 oder 4,
wobei das Anpassen des zu verschlüsselnden Datenpakets umfasst:
- Erstellen eines Datenblocks, welcher Datenblock das zu verschlüsselnde Datenpaket und eine Block-Charakteristik enthält, wobei die Block-Charakteristik das zu verschlüsselnde Datenpaket in dem Datenblock kennzeichnet; und
- Verwenden des Datenblocks anstelle des zu verschlüsselnden Datenpakets.

6. Verfahren zur Entschlüsselung von gemäß Anspruch 1 mehrfach verschlüsselten Datenpaketen eines Datenstroms, aufweisend die folgenden Schritte:
- (S20) Detektieren wenigstens einer dem mehrfach verschlüsselten Datenpaket zugeordneten unverschlüsselten Schlüsselungs-Charakteristik, welche Schlüsselungs-Charakteristik wenigstens einen Schlüsselungsalgorithmus und einen zugeordneten Kodierschlüssel angibt; und
- (S21) Sequentielles Entschlüsseln des zu entschlüsselnden Datenpakets in wenigstens zwei aufeinander folgenden Entschlüsselungsstufen unter Verwendung des in der wenigstens einen Schlüsselungs-Charakteristik angegebenen wenigstens einen Schlüsselungsalgorithmus und zugeordneten Kodierschlüssels.

7. Verfahren nach Anspruch 6,
wobei wenigstens eine Entschlüsselungsstufe die folgenden Schritte umfasst:
- (S22) Detektieren einer dem Datenpaket zugeordneten unverschlüsselten Segmentier-Charakteristik, wobei die Segmentier-Charakteristik Datenpakete bezeichnet, die Segmente eines einzelnen Gesamtdatenpakets sind;
- (S23) Bilden des Gesamtdatenpakets anhand der entschlüsselten Datenpakete und der Segmentier-Charakteristik nach dem Entschlüsseln; und
- (S24) Verwenden des Gesamtdatenpakets anstelle des Datenpakets.

8. Verfahren nach einem der Ansprüche 6 oder 7,
wobei wenigstens eine Entschlüsselungsstufe umfasst:
- (S25, S26) Detektieren einer unverschlüsselten Block-Charakteristik in dem Datenpaket nach dem Entschlüsseln, wobei die Block-Charakteristik in dem Datenpaket ein im weiteren Verfahren zu verwendendes Datenpaket kennzeichnet.

9. Verfahren nach einem der vorangegangenen Ansprüche,
wobei die unterschiedlichen Schlüsselungsalgorithmen und/oder Kodierschlüssel voneinander unabhängig sind.

10. Signalfolge, welche die Ausführung des Verfahrens nach einem der Ansprüche 1 bis 9 veranlasst, wenn sie in einen Datenverarbeiter (61, 62; 63, 64, 65; 66), insbesondere einen Mikroprozessor, eines Datenverarbeitungssystem (11; 12; 13) geladen ist.

11. Datenverarbeitungssystem (11; 12; 13),
wobei das Datenverarbeitungssystem (11; 12; 13) wenigstens Datenpakete eines Datenstroms empfängt und die empfangenen Datenpakete gemäss einer vorgegebenen Vorschrift verarbeitet,
**dadurch gekennzeichnet,**
**dass** das Datenverarbeitungssystem (11; 12; 13) dazu programmiert und eingerichtet ist, das Verfahren nach einem der Ansprüche 1 bis 9 auszuführen.

12. Datenverarbeitungssystem (11) nach Anspruch 11, umfassend eine Speichereinrichtung (41, 41'), in welcher wenigstens zwei unterschiedliche Kodierschlüssel (K1, K3) gespeichert sind;
wenigstens zwei Datenverarbeiter (61, 62), die jeweils eine festkodierte Schaltungslogik aufweisen, welche Schaltungslogik jeweils unterschiedliche Schlüsselungsalgorithmen (S1, S3) zur Verarbeitung eines empfangenen Datenpakets unter Verwendung eines Kodierschlüssels (K1, K3) implementiert;
ein Schaltnetzwerk (71), um die Datenverarbeiter (61, 62) wahlweise seriell zu verbinden, wobei die Reihenfolge änderbar ist; und
eine Steuereinrichtung (81), welche das Schaltnetzwerk (71) und die wenigstens zwei Datenverarbeiter (61, 62) steuert, wenigstens die Datenpakete des Datenstroms empfängt und an einen ersten der wenigstens zwei Datenverarbeiter (61, 62) ausgibt, aus der Speichereinrichtung (41, 41') unterschiedliche Kodierschlüssel (K1, K3) ausliest und an die Datenverarbeiter (61, 62) ausgibt.

13. Datenverarbeitungssystem (12) nach Anspruch 11, umfassend
eine Speichereinrichtung (42), in welcher wenigstens zwei unterschiedliche Kodierschlüssel (K1-K9) und wenigstens zwei unterschiedliche Schlüsselungsalgorithmen (S1-S9) gespeichert sind;
wenigstens zwei Datenverarbeiter (63, 64, 65), die jeweils eine programmierbare Schaltungslogik zum Verarbeiten empfangener Datenpakete aufweisen;
ein Verbindungsnetz (72), welches die Datenverarbeiter (63, 64, 65) seriell mit einer vorgegebenen Reihenfolge verbindet; und
eine Steuereinrichtung (82), welche die wenigstens zwei Datenverarbeiter (63, 64, 65) steuert, aus der Speichereinrichtung (42) unterschiedliche Schlüsselungsalgorithmen (S1-S9) ausliest und die Schaltungslogiken der Datenverarbeiter (63, 64, 65) entsprechend programmiert, wenigstens die Datenpakete des Datenstroms empfängt und an einen ersten der wenigstens zwei Datenverarbeiter (63, 64, 65) ausgibt, und aus der Speichereinrichtung (42) unterschiedliche Kodierschlüssel (K1-K9) ausliest und an die Datenverarbeiter (63, 64, 65) ausgibt,
wobei die gemäss eines jeweiligen Schlüsselungsalgorithmus (S1-S9) programmierten Schaltungslogiken der jeweiligen Datenverarbeiter (63, 64, 65) die jeweils empfangenen Datenpakete unter Verwendung des jeweiligen empfangenen Kodierschlüssels (K1-K9) verarbeiten.

14. Datenverarbeitungssystem (13) nach Anspruch 11, umfassend
eine Speichereinrichtung (43, 43'), in welcher wenigstens zwei unterschiedliche Kodierschlüssel (K2, K3) und wenigstens zwei unterschiedliche Schlüsselungsalgorithmen (S2, S3) gespeichert sind;
einen Datenverarbeiter (66) mit einer programmierbaren Schaltungslogik zum Verarbeiten empfangener Datenpakete; und
eine Steuereinrichtung (83), welche wenigstens die Datenpakete des Datenstroms empfängt, aus der Speichereinrichtung (43, 43') zeitlich nacheinander unterschiedliche Schlüsselungsalgorithmen (S2, S3) ausliest und die Schaltungslogik des Datenverarbeiter (66) entsprechend programmiert sowie aus der Speichereinrichtung (43, 43') zeitlich nacheinander unterschiedliche Kodierschlüssel (K2, K3) ausliest und zusammen mit zu verarbeitenden Daten an den Datenverarbeiter (66) ausgibt,
wobei die Steuereinrichtung (83) weiter von dem Datenverarbeiter (66) unter Verwendung des jeweiligen Kodierschlüssels (K2, K3) und Schlüsselalgorithmus verarbeitete Daten erhält, und
wobei die Steuereinrichtung (83) weiter die von dem Datenverarbeiter (66) empfangenen verarbeiteten Daten wenigstens einmal an den Datenverarbeiter (66) ausgibt und diesen so steuert, dass der Datenverarbeiter (66) ein von der Steuerungseinrichtung empfangenes zu verarbeitendes Datenpaket wenigstens zweimal zeitlich hintereinander unter Verwendung unterschiedlicher Schlüsselungsalgorithmen (S2, S3) und unterschiedlicher Kodierschlüssel (K2, K3) verarbeitet.

15. Datenverarbeitungssystem (11; 12; 13) nach einem der Ansprüche 11 bis 14,
wobei die Steuereinrichtung (81; 82; 83) beim Empfang eines zu verschlüsselnden Datenpakets automatisch eine Anzahl, Art und Reihenfolge von in aufeinander folgenden Verschlüsselungsstufen zu verwendende unterschiedliche Schlüsselungsalgorithmen (S1-S9) bestimmt, in den aufeinander folgenden Verschlüsselungsstufen zu verwendende unterschiedliche Kodierschlüssel (K1-K9) bestimmt und jeweils einen Kodierschlüssel (K1-K9) zu jeweils einem Schlüsselungsalgorithmus (S1-S9) in jeweils einer Verschlüsselungsstufe zuordnet,
wobei die Steuereinrichtung (81; 82; 83) weiter den wenigstens einen Datenverarbeiter (61-66) entsprechend steuert, um ein mehrfach verschlüsseltes Datenpaket zu erhalten, und
wobei die Steuereinrichtung (81; 82; 83) weiter automatisch eine unverschlüsselte Schlüsselungs-Charakteristik erstellt, welche Schlüsselungs-Charakteristik wenigstens den zeitlich zuletzt verwendeten Schlüsselungsalgorithmus (S1-S9) und den zugeordneten Kodierschlüssel (K1-K9) angibt, und die Schlüsselungs-Charakteristik zusammen mit dem mehrfach verschlüsselten Datenpaket ausgibt.

16. Datenverarbeitungssystem (11; 12; 13) nach Anspruch 15,
wobei die Steuereinrichtung (81; 82; 83) weiter automatisch wenigstens eine Formatvorschrift des in der jeweiligen Verschlüsselungsstufe verwendeten Schlüsselungsalgorithmus (S1-S9) ermittelt, wobei die wenigstens eine Formatvorschrift einen Aufbau der mit dem jeweiligen Schlüsselungsalgorithmus (S1-S9) verschlüsselbaren Datenpakete festlegt und den Aufbau des zu verschlüsselnden Datenpakets vor der Ausgabe an den jeweiligen Datenverarbeiter (61-66) unter Verwendung der wenigstens einen Formatvorschrift an den jeweiligen Schlüsselungsalgorithmus (S1-S9) anpasst.

17. Datenverarbeitungssystem (11; 12; 13) nach Anspruch 15 oder 16,
wobei die Steuereinrichtung (81; 82; 83) weiter automatisch aus der Speichereinrichtung (41, 41'; 42; 43, 43') eine Schlüsselformatvorschrift des in der jeweiligen Verschlüsselungsstufe zu verwendenden Schlüsselungsalgorithmus (S1-S9) ausliest, wobei die wenigstens eine Schlüsselformatvorschrift einen Aufbau der mit dem jeweiligen Schlüsselungsalgorithmus (S1-S9) verwendbaren Kodierschlüssel (K1-K9) festlegt und die Schlüsselformatvorschrift bei der Bestimmung des in der jeweiligen Verschlüsselungsstufe zu verwendenden Kodierschlüssels (K1-K9) berücksichtigt.

18. Datenverarbeitungssystem (11; 12; 13) nach einem der Ansprüche 11 bis 14,
wobei die Steuereinrichtung (81; 82; 83) beim Empfang von zu entschlüsselnden mehrfach verschlüsselten Datenpaketen automatisch wenigstens eine dem Datenpaket zugeordnete unverschlüsselte Schlüsselungs-Charakteristik detektiert, welche Schlüsselungs-Charakteristik wenigstens einen Schlüsselungsalgorithmus (S1-S9) und einen zugeordneten Kodierschlüssel (K1-K9) angibt und den wenigstens einen Datenverarbeiter (61-66) so steuert, dass dieser das zu entschlüsselnde Datenpaket sequentiell in wenigstens zwei aufeinander folgenden Entschlüsselungsstufen unter Verwendung des in der wenigstens einen Schlüsselungs-Charakteristik angegebenen wenigstens einen Schlüsselungsalgorithmus (S1-S9) und zugeordneten Kodierschlüssels (K1-K9) entschlüsselt.

19. Datenverarbeitungssystem (11; 12; 13) nach Anspruch 18,
wobei die Steuereinrichtung (81; 82; 83) vor der Ausgabe des verschlüsselten Datenpakets als mehrfach verschlüsseltes Datenpaket bzw. des entschlüsselten Datenpakets als mehrfachentschlüsseltes Datenpaket weiter automatisch das verschlüsselte Datenpaket bzw. das entschlüsselte Datenpaket an ein Format des empfangenen unverschlüsselten Datenpakets bzw. des empfangenen verschlüsselten Datenpakets anpasst.

## Claims

1. A method of encrypting data packets of a data stream wherein a data packet to be encrypted is automatically encrypted sequentially in at least two subsequent encryption stages, comprising the following steps:
- (S10) determining the number, type, and sequence of different coding algorithms to be used in the subsequent encryption stages;
- (S12) determining the different coding keys to be used in the subsequent encryption stages;
- (S13) assigning one coding key each to one coding algorithm each in one encryption stage each; and
- (S16, S17) sequentially encrypting a data packet to be encrypted in at least two subsequent encryption stages to obtain a multi-encrypted data packet.
- (S18) creating an unencrypted coding characteristic for the multi-encrypted data packet, said coding characteristic at least specifying the latest coding algorithm used and the assigned coding key; and
- (S19) outputting the coding characteristic together with the multi-encrypted data packet.

2. The method according to claim 1, further comprising:
- adding the created unencrypted coding characteristic in each encryption stage to the respective encrypted data packet after encryption.

3. The method according to any one of the preceding claims, each encryption stage comprising:
- (S14) determining at least one formatting instruction of the coding algorithm used in the respective encryption stage wherein the at least one formatting instruction defines a structure of the data packets being encryptable using the respective coding algorithm; and
- (S15) adjusting the structure of the data packet to be encrypted to the respective coding algorithm using the at least one formatting instruction.

4. The method according to claim 3,
wherein adjusting the data packet to be encrypted comprises:
- segmenting the data packet to be encrypted into several partial data packets to be encrypted;
- using the partial data packets instead of the data packet to be encrypted;
- creating an unencrypted segmenting characteristic for the partial data packets to be encrypted wherein the segmenting characteristic identifies partial data packets obtained by segmenting a single data packet; and
- outputting the segmenting characteristic together with the segmented partial data packets to be encrypted.

5. The method according to any one of claim 3 or 4,
wherein adjusting the data packet to be encrypted comprises:
- creating a data block, said data block containing the data packet to be encrypted and a block characteristic, wherein the block characteristic identifies the data packet to be encrypted in the data block; and
- using the data block instead of the data packet to be encrypted.

6. A method of decrypting multi-encrypted data packets of a data stream according to claim 1 having the following steps:
- (S20) detecting at least one unencrypted coding characteristic assigned to the multi-encrypted data packet, said coding characteristic specifying at least one coding algorithm and one assigned coding key; and
- (S21) sequentially decrypting the data packet to be decrypted in at least two subsequent decryption stages using the at least one coding algorithm and assigned coding key specified in the at least one coding characteristic.

7. The method according to claim 6,
wherein at least one decryption stage comprises the following steps:
- (S22) detecting an unencrypted segmenting characteristic assigned to the data packet, said segmenting characteristic specifying data packets that are segments of a single whole data packet;
- (S23) forming the whole data packet based on the decrypted data packets and the segmenting characteristic after decryption; and
- (S24) using the whole data packet instead of the data packet.

8. The method according to any one of claim 6 or 7,
wherein at least one decryption stage comprises:
- (S25, S26) detecting an unencrypted block characteristic in the data packet after decryption, said block characteristic in the data packet identifying a data packet to be used in the further procedure.

9. The method according to any one of the preceding claims,
wherein the different coding algorithms and/or coding keys are independent of each other.

10. A signal sequence causing the execution of the method according to claim 1 to 9 when being loaded into a data processor (61; 62; 63; 64; 65; 66), in particular a microprocessor, of a data processing system (11; 12; 13).

11. A data processing system (11; 12; 13),
said data processing system (11; 12; 13) at least receiving data packets of a data stream and processing the data packets received in accordance with a predefined instruction,
**characterized in that**
the data processing system (11; 12; 13) is programmed and set up to execute the method according to any one of claims 1 to 9.

12. The data processing system (11) according to claim 11, comprising
a storage unit (41, 41') in which at least two different coding keys (K1, K3) are stored;
at least two data processors (61, 62), each comprising a hard-coded logic circuit, said logic circuit implementing respective different coding algorithms (S1, S3) for processing a data packet received using a coding key (K1, K3);
a switching network (71) to optionally connect the data processors (61, 62) in series, the connection order of the two being changeable; and
a control unit (81) that controls the switching network (71) and the at least two data processors (61, 62), at least receives the data packets of the data stream and outputs them to a first of the at least two data processors (61, 62), reads different coding keys (K1, K3) from the storage unit (41, 41') and outputs them to the data processors (61, 62).

13. The data processing system (12) according to claim 11, comprising
a storage unit (42) in which at least two different coding keys (K1-K9) and at least two different coding algorithms (S1-S9) are stored;
at least two data processors (63, 64, 65), each comprising a programmable logic circuit for processing data packets received;
a connection network (72) that connects the data processors (63, 64, 65) in series in a predefined order; and
a control unit (82) that controls the at least two data processors (63, 64, 65), reads different coding algorithms (S1-S9) from the storage unit (42) and programs the logic circuits of the data processors (63, 64, 65) accordingly, at least receives the data packets of the data stream and outputs them to a first of the at least two data processors (63, 64, 65), and reads different coding keys (K1-K9) from the storage unit (42) and outputs them to the data processors (63, 64, 65),
wherein the logic circuits of the respective data processor (63, 64, 65) programmed according to a respective coding algorithm (S1-S9) process each of the data packets received using the respective coding key (K1-K9) received.

14. The data processing system (13) according to claim 11, comprising
a storage unit (43, 43') in which at least two different coding keys (K2, K3) and at least two different coding algorithms (S2, S3) are stored;
a data processor (66) with a programmable logic circuit for processing received data packets; and
a control unit (83) receiving at least the data packets of the data stream, reads different coding algorithms (S2, S3) in chronological succession from the storage unit (43, 43') and programs the logic circuit of the data processor (66) accordingly, and reads different coding keys (K2, K3) in chronological succession from the storage unit (43, 43') and outputs them together with the data to be processed to the data processor (66),
wherein the control unit (83) further receives data processed using the coding key (K2, K3) and coding algorithm from the data processor (66), and
wherein the control unit (83) further outputs the data received from the data processor (66) at least once to the data processor (66) and controls it in such a way that the data processor (66) processes a data packet to be processed received from the control unit at least twice in chronological succession using different coding algorithms (S2, S3) and different coding keys (K2, K3).

15. The data processing system (11; 12; 13) according to any one of claims 11 to 14
wherein the control unit (81; 82; 83), upon receiving a data packet to be encrypted, automatically determines a number, type, and sequence of different coding algorithms (S1-S9) to be used in the subsequent encryption stages, determines different coding keys (K1-K9) to be used in the subsequent encryption stages, and assigns one coding key (K1-K9) each to one coding algorithm (S1-S9) each in one encryption stage each,
wherein the control unit (81; 82; 83) further controls the at least one data processor (61-66) accordingly to obtain a multi-encrypted data packet, and
wherein the control unit (81; 82; 83) further automatically creates an unencrypted coding characteristic, said coding characteristic specifying at least the latest coding algorithm (S1-S9) used and the assigned coding key (K1-K9), and outputs the coding characteristic together with the multi-encrypted data packet.

16. The data processing system (11; 12; 13) according to claim 15,
wherein the control unit (81; 82; 83) further automatically determines at least one formatting instruction of the coding algorithm (S1-S9) used in the respective encryption stage, the at least one formatting instruction defining a structure of the data packet being encryptable using the respective coding algorithm (S1-S9) and adjusting the structure of the data packet to be encrypted using the at least one formatting instruction to the respective coding algorithm (S1-S9) before outputting it to the respective data processor (61-66).

17. The data processing system (11; 12; 13) according to claim 15 or 16
wherein the control unit (81; 82; 83) further automatically reads a coding format instruction of the coding algorithm (S1-S9) to be used in the respective encryption stage from the storage unit (41, 41'; 42; 43, 43'), said at least one coding format instruction defining a structure of the coding keys (K1-K9) that can be used with the respective coding algorithm (S1-S9) and taking the coding format instruction into consideration when determining the coding key (K1-K9) to be used in the respective encryption stage.

18. The data processing system (11; 12; 13) according to any one of claims 11 to 14,
wherein the control unit (81; 82; 83), upon receiving multi-encrypted data packets to be decrypted, automatically detects at least one unencrypted coding characteristic assigned to the data packet, said coding characteristic specifying at least one coding algorithm (S1-S9) and an assigned coding key (K1-K9) and controls the at least one data processor (61-66) in such a way that it decrypts the data packet to be decrypted using the at least one coding algorithm (S1-S9) and assigned coding key (K1-K9) specified in the at least one coding characteristic sequentially in at least two subsequent decryption stages.

19. The data processing system (11; 12; 13) according to claim 18,
wherein the control unit (81; 82; 83) further automatically adjusts the encrypted data packet or decrypted data packet to a format of the unencrypted data packet received or the encrypted data packet received before outputting the encrypted data packet as a multi-encrypted data packet or the decrypted data packet as a multi-decrypted data packet.

## Revendications

1. Procédé pour le chiffrement de paquets de données d'un courant de données, dans lequel un paquet de données à chiffrer est automatiquement chiffré séquentiellement à au moins deux niveaux de chiffrement successifs, présentant les étapes suivantes :
- (S10) détermination du nombre, du type et de l'ordre d'algorithmes de chiffrement différents à utiliser aux niveaux de chiffrement successifs ;
- (S12) détermination de clés de codage différentes à utiliser aux niveaux de chiffrements successifs ;
- (S13) affectation chaque fois d'une clé de codage à chaque fois un algorithme de chiffrement à chaque fois un niveau de chiffrement ;
- (S16, S17) chiffrement séquentiel d'un paquet de données à chiffrer à au moins deux niveaux de chiffrement successifs afin d'obtenir un paquet de données chiffré plusieurs fois ;
- (S18) établissement d'une caractéristique de chiffrement non chiffrée relative au paquet de données chiffré plusieurs fois, caractéristique de chiffrement qui indique au moins le dernier algorithme de chiffrement utilisé et la clé de codage affectée ; et
- (S19) transmission de la caractéristique de chiffrement ensemble avec le paquet de données chiffré plusieurs fois.

2. Procédé selon la revendication 1, comprenant en outre
- l'ajout de la caractéristique de chiffrement non chiffrée générée à chaque niveau de chiffrement après le chiffrement à chaque paquet de données chiffré.

3. Procédé selon l'une quelconque des revendications précédentes, chaque niveau de chiffrement comprenant :
- (S14) la détermination d'au moins une prescription de format de l'algorithme de chiffrement utilisé au niveau de chiffrement concerné, la ou les prescriptions de format définissant une structure des paquets de données chiffrables avec l'algorithme de chiffrement correspondant ; et
- (S15) l'adaptation de la structure du paquet de données à chiffrer à l'algorithme de chiffrement correspondant en utilisant la ou les prescriptions de format.

4. Procédé selon la revendication 3,
l'adaptation du paquet de données à chiffrer comprenant :
- la segmentation du paquet de données à chiffrer en plusieurs paquets de données partiels à chiffrer ;
- l'utilisation des paquets de données partiels au lieu du paquet de données à chiffrer ;
- l'utilisation d'une caractéristique de segmentation non chiffrée relative aux paquets de données partiels à chiffrer, la caractéristique de segmentation désignant des paquets de données partiels qui ont été obtenus par segmentation d'un paquet de données individuel ; et
- la transmission de la caractéristique de segmentation ensemble avec les paquets de données partiels segmentés à chiffrer.

5. Procédé selon l'une quelconque des revendications 3 ou 4,
l'adaptation du paquet de données à chiffrer comprenant :
- l'établissement d'un bloc de données qui contient le paquet de données et une caractéristique de bloc, la caractéristique de bloc identifiant le paquet de données à chiffrer dans le bloc de données ; et
- l'utilisation du bloc de données au lieu du paquet de données à chiffrer.

6. Procédé pour le déchiffrement de paquets de données chiffrés plusieurs fois d'un courant de données selon la revendication 1, présentant les étapes suivantes :
- (S18) détection d'au moins une caractéristique de chiffrement non chiffrée affectée au paquet de données chiffré plusieurs fois, caractéristique de chiffrement qui indique au moins un algorithme de chiffrement utilisé et une clé de codage affectée ; et
- (S21) déchiffrement séquentiel du paquet de données à déchiffrer à au moins deux niveaux de déchiffrement successifs en utilisant le ou les algorithmes de chiffrement et la clé de codage affectée indiqués dans la ou les caractéristiques de chiffrement.

7. Procédé selon la revendication 6,
un niveau de déchiffrement comprenant au moins les étapes suivantes :
- (S22) détection d'une caractéristique de segmentation non chiffrée affectée au paquet de données, la caractéristique de segmentation désignant des paquets de données qui sont des segments d'un paquet de données global individuel ;
- (S23) formation du paquet de données global à l'aide des paquets de données déchiffrés et de la caractéristique de segmentation après le déchiffrement ; et
- (S24) utilisation du paquet de données global au lieu du paquet de données.

8. Procédé selon l'une quelconque des revendications 6 ou 7,
au moins un niveau de déchiffrement comprenant :
- (S25, S26) la détection d'une caractéristique de bloc non chiffrée dans le paquet de données après le déchiffrement, la caractéristique de bloc identifiant dans le paquet de données un paquet de données à utiliser dans la suite du procédé.

9. Procédé selon l'une quelconque des revendications précédentes,
les différents algorithmes de chiffrement et/ou clés de codage étant indépendants l'un de l'autre.

10. Séquence de signaux qui entraîne l'exécution du procédé selon l'une quelconque des revendications 1 à 9 lorsqu'elle est chargée dans un équipement de traitement de données (61, 62 ; 63, 64, 65 ; 66), en particulier un microprocesseur, d'un système de traitement de données (11 ; 12 ; 13).

11. Système de traitement de données (11 ; 12 ; 13),
le système de traitement de données (11 ; 12 ; 13) recevant au moins des paquets de données d'un courant de données et traitant les paquets de données reçus conformément à une prescription donnée,
**caractérisé en ce que**
le système de traitement de données (11 ; 12 ; 13) est programmé et configuré de manière à exécuter le procédé selon l'une quelconque des revendications 1 à 9.

12. Système de traitement de données (11) selon la revendication 11, comprenant
un équipement d'enregistrement (41, 41') dans lequel sont enregistrées au moins deux clés de codage différentes (K1, K3) ;
au moins deux équipements de traitement de données (61, 62) qui présentent chacun un circuit logique à codage fixe, circuit logique qui implémente des algorithmes de chiffrement chaque fois différents (S1, S3) pour le traitement d'un paquet de données reçu en utilisant une clé de codage (K1, K3) ;
un réseau de commutation (71) afin de connecter au choix en série l'équipement de traitement de données (61, 62), l'ordre étant variable ; et
un équipement de commande (81) qui commande le réseau de commutation (71) et le ou les équipements de traitement de données (61, 62), reçoit au moins les paquets de données du courant de données et les transmet à un premier des au moins deux équipements de traitement de données (61, 62), lit des clés de codage différentes (K1, K3) de l'équipement d'enregistrement (41, 41') et les transmet à l'équipement de traitement de données (61, 62).

13. Système de traitement de données (12) selon la revendication 11, comprenant
un équipement d'enregistrement (42) dans lequel sont enregistrées au moins deux clés de codage différentes (K1-K9) et au moins deux algorithmes de chiffrement différents (S1-S9) ;
au moins deux équipements de traitement de données (63, 64, 65) qui présentent chacun un circuit logique programmable pour le traitement de paquets de données reçus ;
un réseau de connexion (72) qui connecte les équipements de traitement de données (63, 64, 65) en série dans un ordre prédéfini ; et
un équipement de commande (82) qui commande au moins deux équipements de traitement de données (63, 64, 65), lit des algorithmes de chiffrement différents S1-S9) de l'équipement d'enregistrement (42) et programme en conséquence les logiques de commutation des équipements de traitement de données (63, 64, 65), reçoit au moins les paquets de données du courant de données et les transmet à un premier des au moins deux équipements de traitement de données (63, 64, 65), et lit de l'équipement d'enregistrement (42) des clés de codage différentes (K1-K9) et les transmet aux équipements de traitement de données (63, 64, 65),
les logiques de commutation programmées conformément à un algorithme de chiffrement (S1-S9) correspondant des équipements de traitement de données (63, 64, 65) traitant les paquets de données chaque fois reçus en utilisant la clé de codage (K1-K9) chaque fois reçue.

14. Système de traitement de données (13) selon la revendication 11, comprenant
un équipement d'enregistrement (43, 43') dans lequel sont enregistrées au moins deux clés de codage différentes (K2, K3) et au moins deux algorithmes de chiffrement différents (S2, S3) ;
un équipement de traitement de données (66) avec un circuit logique programmable pour le traitement de paquets de données reçus ; et
un équipement de commande (83) qui reçoit au moins les paquets de données du courant de données, lit des algorithmes de chiffrement différents (S2, S3) l'un après l'autre de l'équipement d'enregistrement (43, 43') et programme en conséquence le circuit logique de l'équipement de traitement de données (66) ainsi que lit des clés de codage différentes (K2, K3) l'une après l'autre de l'équipement d'enregistrement (43, 43') et les transmet ensemble avec des données à traiter à l'équipement de traitement de données (66),
l'équipement de commande (83) continuant à recevoir des données traitées de l'équipement de traitement de données (66) en utilisant la clé de codage (K2, K3) correspondante et l'algorithme de clé, et
l'équipement de commande (83) continuant à transmettre les données traitées reçues de l'équipement de traitement de données (66) au moins une fois à l'équipement de traitement de données (66) et commandant ce dernier de manière à ce que l'équipement de traitement de données (66) traite au moins deux fois successives un paquet de données reçu de l'équipement de commande en utilisant des algorithmes de chiffrement (S2, S3) différents et des clés de codage (K2, K3) différentes.

15. Système de traitement de données (11 ; 12 ; 13) selon l'une quelconque des revendications 11 à 14,
l'équipement de commande (81 ; 82 ; 83) définissant automatiquement à la réception d'un paquet de données à chiffrer un nombre, un type et un ordre d'algorithmes de chiffrement différents (S1-S9) à utiliser aux niveaux de chiffrement successifs, définissant les clés de codage différentes (K1-K9) à utiliser aux niveaux de chiffrement successifs et affectant à chaque clé de codage (K1-K9) un algorithme de chiffrement (S1-S9) à chaque fois un niveau de chiffrement,
l'équipement de commande (81 ; 82 ; 83) continuant à commander le ou les équipements de traitement de données (61-66) en conséquence afin d'obtenir un paquet de données chiffré plusieurs fois, et
l'équipement de commande (81 ; 82 ; 83) continuant à établir automatiquement une caractéristique de chiffrement non chiffrée qui indique au moins le dernier algorithme de chiffrement (S1-S9) utilisé et la clé de codage (K1-K9) affectée, et transmet la caractéristique de chiffrement ensemble avec le paquet de données chiffré plusieurs fois.

16. Système de traitement de données (11 ; 12 ; 13) selon la revendication 15,
l'équipement de commande (81 ; 82 ; 83) continuant à déterminer automatiquement au moins une prescription de format de l'algorithme de chiffrement utilisé au niveau de chiffrement concerné, la ou les prescriptions de format définissant une structure des paquets de données chiffrables avec l'algorithme de chiffrement (S1-S9) concerné et adaptant la structure du paquet de données à chiffrer avant la transmission à l'équipement de traitement de données (61-66) correspondant en utilisant la ou les prescriptions de format à l'algorithme de chiffrement (S1-S9) correspondant.

17. Système de traitement de données (11 ; 12 ; 13) selon la revendication 15 ou 16,
l'équipement de commande (81 ; 82 ; 83) continuant à lire automatiquement une prescription de format de clé de l'algorithme de chiffrement (S1-S9) à utiliser au niveau de chiffrement concerné de l'équipement d'enregistrement (41, 41' , 42 ; 43, 43'), la ou les prescriptions de format de clé définissant une structure des clés de codage (K1-K9) utilisables avec l'algorithme de chiffrement (S1-S9) concerné et prenant en considération la prescription de format de clé lors de la définition de la clé de codage (K1-K9) à utiliser au niveau de chiffrement concerné.

18. Système de traitement de données (11 ; 12 ; 13) selon l'une quelconque des revendications 11 à 14,
l'équipement de commande (81 ; 82 ; 83) détectant automatiquement à la réception de paquets de données chiffrées plusieurs fois à déchiffrer au moins une caractéristique de chiffrement non chiffrée affectée au paquet de données, caractéristique de chiffrement qui indique au moins un algorithme de chiffrement (S1-S9) et une clé de codage (K1-K9) affectée et commande le ou les équipements de traitement de données (61-66) de manière à ce que ce(s) dernier(s) déchiffre séquentiellement le paquet de données à déchiffrer à au moins deux niveaux de déchiffrement successifs en utilisant le ou les algorithmes de chiffrement (S1-S9) indiqués dans la ou les caractéristiques de chiffrement et de la clé de codage (K1-K9) affectée.

19. Système de traitement de données (11 ; 12 ; 13) selon la revendication 18,
l'équipement de commande (81 ; 82 ; 83) continuant à adapter automatiquement, avant la transmission du paquet de données chiffré comme paquet de données chiffré plusieurs fois ou du paquet de données déchiffré comme paquet de données déchiffré plusieurs fois, le paquet de données chiffré ou le paquet de données déchiffré à un format du paquet de données non chiffré reçu ou du paquet de données chiffré reçu.
